# FASCICULE DE BREVET EUROPEEN

(11) **EP 3 351 842 B1**
(45) Date de publication et mention de la délivrance du brevet: **06.11.2019**
(21) Numéro de dépôt: 18152912.4
(22) Date de dépôt: 23.01.2018
(51) Int. Cl.: F16L 29/02, F16L 37/34, F16L 37/30

(54) **ELÉMENT DE RACCORD FLUIDIQUE ET RACCORD FLUIDIQUE INCORPORANT UN TEL ÉLÉMENT**
FLUIDANSCHLUSSELEMENT UND FLUIDANSCHLUSS, DER EIN SOLCHES ELEMENT UMFASST
FLUID CONNECTION ELEMENT AND FLUID CONNECTION INCORPORATING SUCH AN ELEMENT

(30) Priorité: 24.01.2017 FR 1750579; 06.10.2017 FR 1759392
(43) Date de publication de la demande: 25.07.2018
(73) Titulaire: Staubli Faverges, 74210 Faverges (FR)
(72) Inventeur: TIBERGHIEN, Alain-Christophe, 74320 Sevrier (FR); DURIEUX, Christophe, 73200 Gilly sur Isere (FR); MAYER, Romain, 73400 Hery sur Ugine (FR)
(74) Mandataire: Lavoix

(56) Documents cités:
- EP-A1- 0 847 511
- EP-A2- 0 621 430
- WO-A1-90/08284
- GB-A- 2 412 956

## Description

L'invention a trait à un élément de raccord fluidique destiné à être connecté à un élément complémentaire pour permettre la circulation d'un fluide au sein d'un raccord.

Le domaine d'application de l'invention est celui du raccordement de canalisations de fluide, notamment de fluide sous haute pression ou de fluide à fort débit.

Il est connu d'assurer l'étanchéité d'un élément de raccord mâle ou femelle équipé d'un clapet au moyen d'un joint torique en élastomère logé dans une gorge annulaire et comprimé radialement entre le clapet et un corps de l'élément de raccord lorsque le clapet est en position de fermeture. Lorsque ce type de joint est directement exposé à la pression et/ou au débit du fluide traversant l'élément de raccord, il risque d'être éjecté de sa gorge, ce qui provoque des fuites en configuration désaccouplée des éléments du raccord.

Pour pallier ce problème, il est connu de EP-A-0 621 430 d'utiliser une jupe de protection au sein d'un élément mâle de raccord et une autre jupe de protection au sein d'un élément femelle de raccord, ces jupes étant destinées à s'interposer radialement entre le fluide traversant le raccord et un joint, lors de l'accouplement et du désaccouplement, ainsi qu'en configuration accouplée des éléments de raccord. Ceci évite normalement que le joint soit chassé de son logement. Ces jupes sont poussées par des ressorts en direction de la partie avant de chaque élément de raccord pour que leur surface destinée à protéger le joint soit dans le prolongement d'une partie avant de l'élément de raccord. Cependant, lorsque le fluide circule dans l'élément de raccord sous forte pression, notamment sous une pression supérieure à 200 bars, il existe un risque que l'effort exercé par le ressort ne soit pas suffisant pour maintenir la jupe en position et que celle-ci soit repoussée par la pression du fluide et découvre le joint qu'elle devrait protéger, lequel est alors exposé au fluide et risque d'être éjecté hors de son logement. Des problèmes analogues se posent lorsque le fluide circule avec un fort débit, notamment de plus de 80 litres/minute pour un passage intérieur dans le raccord de diamètre 8mm.

Le document EP 0847511 B1 divulgue un moyen de blocage d'un élément de jupe par rapport à un élément constitutif d'un clapet.

C'est à ces inconvénients qu'entend plus particulièrement remédier l'invention en proposant un nouvel élément mâle ou femelle de raccord fluidique qui est destiné à être accouplé à un élément de raccord complémentaire pour la jonction de canalisations de fluide et qui permet de protéger efficacement un joint d'étanchéité équipant un clapet de cet élément de raccord, y compris lorsque le fluide traversant le raccord présente une pression ou un débit important.

A cet effet, l'invention concerne un élément de raccord fluidique comprenant un corps délimitant un conduit d'écoulement de fluide et centré sur un axe longitudinal, ainsi qu'un clapet avec une gorge périphérique radiale recevant un joint d'étanchéité, ce clapet étant mobile axialement par rapport au corps entre une position de fermeture, dans laquelle le joint est en contact avec un siège correspondant formé par le corps, et une position d'ouverture, dans laquelle le joint n'est pas en contact avec le siège. Cet élément de raccord comprend également un organe de rappel élastique du clapet vers sa position de fermeture, ainsi qu'une jupe disposée à l'intérieur du corps, cette jupe étant elle-même mobile axialement par rapport au clapet, entre une première position dans laquelle la jupe est dégagée axialement par rapport au joint et une deuxième position dans laquelle la jupe recouvre radialement le joint. Conformément à l'invention, l'élément de raccord comprend au moins un organe d'attelage solidaire axialement de la jupe et mobile, radialement à l'axe longitudinal par rapport au corps entre une première position radiale, dans laquelle l'organe d'attelage solidarise axialement la jupe et le corps et autorise un mouvement axial relatif du clapet par rapport à la jupe, et une deuxième position radiale, dans laquelle l'organe d'attelage solidarise axialement la jupe et le clapet et autorise un mouvement axial relatif de la jupe par rapport au corps, dans une configuration où la jupe recouvre radialement le joint.

Grâce à l'invention, la jupe recouvre radialement le joint porté par le clapet et le protège de la veine fluide principale et l'organe d'attelage permet de sécuriser le positionnement de la jupe le long de l'axe longitudinal du corps de l'élément de raccord, notamment par rapport au joint porté par le clapet de l'élément de raccord, ce qui évite un déplacement intempestif de la jupe ou que ce joint soit découvert sous l'effet d'un effort exercé par le fluide sur la jupe. Les risques de contact direct entre le fluide et le joint du clapet sont ainsi minimisés. En outre, la solidarisation de la jupe avec le corps ou avec le clapet, grâce à l'organe d'attelage, permet d'utiliser ce clapet pour déplacer la jupe, sans devoir utiliser un ressort.

Selon des aspects avantageux mais non obligatoires de l'invention, un tel élément de raccord peut incorporer une ou plusieurs des caractéristiques suivantes, prises dans toute combinaison techniquement admissible :
- Le clapet comprend une première surface de blocage de l'organe d'attelage dans sa première position radiale, ainsi qu'un premier logement de réception d'une partie de l'organe d'attelage dans sa deuxième position radiale, le premier logement étant adjacent le long de l'axe longitudinal à la première surface de blocage, alors que le corps comprend une deuxième surface de blocage de l'organe d'attelage dans sa deuxième position radiale, ainsi qu'un deuxième logement de réception d'une partie de l'organe d'attelage dans sa première position radiale, le deuxième logement de réception étant adjacent le long de l'axe longitudinal à la deuxième surface de blocage.
- En configuration désaccouplée, le clapet est dans sa position de fermeture, la jupe est dans sa première position et l'organe d'attelage est maintenu dans sa première position radiale par la première surface de blocage du clapet, alors que le premier logement de réception est disposé à l'avant de la première surface de blocage et que le deuxième logement de réception est disposé à l'avant de la deuxième surface de blocage.
- La jupe est configurée pour venir en butée avant contre le corps, alors que l'organe d'attelage est dans sa première position radiale.
- Le clapet est configuré pour venir en butée avant contre la jupe dans sa position de fermeture.
- Lorsque l'organe d'attelage est dans sa première position radiale, la valeur maximale d'une distance axiale, mesurée entre la jupe et une partie du corps formant le siège, est inférieure ou égale à la moitié, de préférence au tiers, de la largeur de la gorge périphérique radiale recevant le joint, mesurée parallèlement à l'axe longitudinal.
- Une surface du clapet est apte à venir en butée arrière contre la jupe dans une configuration où l'organe d'attelage est apte à venir dans sa deuxième position radiale.
- La jupe est pourvue d'une portion tubulaire formant une surface radiale cylindrique à section circulaire de recouvrement radial du joint et un diamètre de cette surface est égal au diamètre de la surface de la partie du corps formant le siège.
- La longueur axiale de la surface radiale cylindrique de la portion tubulaire est strictement supérieure à une longueur axiale prise entre une face avant du clapet et la surface de butée arrière du clapet.
- La jupe est équipée d'un logement radial traversant, dans lequel l'organe d'attelage est mobile et l'organe d'attelage présente une dimension radiale supérieure à la dimension radiale du logement radial traversant.
- L'organe d'attelage comprend au moins une bille, notamment deux billes alignées selon une direction radiale à l'axe longitudinal et mobiles dans un même logement radial traversant de la jupe.
- L'organe d'attelage est monobloc avec la jupe d'étanchéité et relié à celle-ci par une portion élastiquement déformable dans une direction radiale à l'axe longitudinal.
- La longueur axiale d'une surface d'une partie, qui constitue le siège formé par le corps, est supérieure ou égale au double d'une distance axiale entre, d'une part, le milieu axial de la gorge périphérique radiale de réception du joint d'étanchéité et, d'autre part, une face avant du clapet. La longueur de la surface de la partie qui forme le siège permet d'assurer que le joint porté par le clapet est en contact étanche avec la surface formant le siège et qu'aucun passage de fluide ne risque de repousser le clapet à l'encontre de l'action de l'organe élastique en cours d'accouplement ou de désaccouplement
- La longueur axiale de la surface de la partie qui constitue le siège est strictement supérieure au double de la distance axiale entre le milieu axial de la gorge et la face avant du clapet, de préférence supérieure ou égale à 2,5 fois cette distance axiale.
- Le joint d'étanchéité est logé dans une gorge périphérique radiale externe d'une partie avant du clapet, le clapet comprend une tige d'épaisseur radiale inférieure à une épaisseur radiale de la partie avant et la jupe est montée autour du clapet, alors que, dans sa première position radiale, l'organe d'attelage coopère avec une gorge annulaire interne du corps et que, dans sa deuxième position radiale, l'organe d'attelage coopère avec une gorge annulaire externe de la tige.
- Le joint d'étanchéité est logé dans une gorge périphérique radiale interne du clapet, le corps comprend un poussoir central fixe qui forme le siège et un élément tubulaire pourvu d'un deuxième joint d'étanchéité, le clapet est monté coulissant autour du poussoir central fixe et à l'intérieur de l'élément tubulaire, alors que, dans sa position de fermeture, le deuxième joint est en contact avec le clapet, la jupe est montée, radialement à l'axe longitudinal, entre le poussoir et le clapet et, dans sa première position radiale, l'organe d'attelage coopère avec une gorge annulaire externe du poussoir, alors que, dans sa deuxième position radiale, l'organe d'attelage coopère avec une gorge annulaire interne du clapet.
- Le poussoir central fixe est équipé de canaux de passage de fluide de ou vers un volume interne du poussoir central fixe, alors que le siège, d'une part, et le deuxième logement, d'autre part, sont disposés, le long de l'axe longitudinal, de part et d'autre des passages radiaux.

Selon un deuxième aspect, l'invention concerne un raccord fluidique pour la jonction de canalisations de fluide sous pression, ce raccord comprenant un élément mâle et un élément femelle prévus pour s'emmancher l'un dans l'autre dont l'un au moins est tel que mentionné ci-dessus.

De façon avantageuse, un tel raccord peut incorporer une ou plusieurs des caractéristiques suivantes, prises selon toute combinaison techniquement admissible :
- Seul un premier élément de raccord, parmi l'élément mâle et l'élément femelle, est tel que mentionné ci-dessus, alors que le clapet du premier élément de raccord est apte à être déplacé vers sa position d'ouverture par un corps du deuxième élément de raccord, parmi l'élément mâle et l'élément femelle, et alors que, en configuration accouplée, la jupe du premier élément de raccord est apte à recouvrir radialement le joint d'étanchéité du clapet du premier élément de raccord ainsi qu'un joint d'étanchéité reçu dans une gorge périphérique radiale du corps du deuxième élément de raccord.
- Le corps du premier élément de raccord comprend une butée de limitation du déplacement de la jupe vers l'arrière par rapport au corps du premier élément de raccord, cette butée étant disposée de telle sorte que, en cours d'accouplement, lorsque l'organe d'attelage est dans sa deuxième position radiale, la jupe ne peut pas être déplacée vers une position axiale où elle ne recouvre pas radialement le joint d'étanchéité du deuxième élément de raccord.
- La jupe présente une portion tubulaire avec une surface radiale étagée, avec une portion avant et une portion arrière qui recouvrent radialement respectivement le joint du deuxième élément de raccord et le joint du premier élément de raccord lorsque l'organe d'attelage est dans sa deuxième position radiale et, dans cette configuration de recouvrement des joints, l'épaisseur radiale entre la portion arrière et le clapet du premier élément de raccord est supérieure à l'épaisseur radiale entre la portion avant et le corps du deuxième élément de raccord .
- La longueur axiale de la surface de la partie qui constitue le siège formé par le corps du premier élément de raccord est supérieure ou égale à une distance axiale prise, lorsque les premier et deuxième éléments du raccord sont en cours d'accouplement ou de désaccouplement, la face avant du clapet du premier élément de raccord étant en contact avec le corps du deuxième élément de raccord, entre, d'une part, le milieu axial de la gorge périphérique radiale du clapet et, d'autre part, le milieu axial de la gorge périphérique radiale du corps du deuxième élément de raccord.
- La longueur axiale de la surface de la partie qui constitue le siège est strictement supérieure à la distance axiale prise entre les milieux axiaux des gorges, de préférence supérieure ou égale à 1,2 fois cette distance axiale.
- En cours d'accouplement des éléments mâle et femelle du raccord, le joint d'étanchéité du premier élément de raccord est en contact étanche avec la surface de la partie qui constitue le siège et empêche le fluide sous pression de transiter entre le conduit d'écoulement de fluide et la face avant du clapet, tant que le deuxième joint d'étanchéité du deuxième élément de raccord n'est pas en contact étanche avec le corps du premier élément de raccord.
- En cours de désaccouplement des éléments mâle et femelle du raccord, le joint d'étanchéité du premier élément de raccord conforme à l'invention est en contact étanche avec la surface de la partie qui constitue le siège avant que le joint d'étanchéité du deuxième élément de raccord ne quitte le contact étanche avec le corps du premier élément de raccord.
- L'élément mâle de raccord et l'élément femelle de raccord complémentaire sont tels que mentionnés ci-dessus, alors que, en configuration accouplée du raccord, les organes d'attelage des éléments mâle et femelle de raccord sont chacun dans leur deuxième position radiale et les clapets des éléments mâle et femelle de raccord sont chacun dans leur position d'ouverture.
- En cours d'accouplement des éléments mâle et femelle du raccord, lorsque l'organe d'attelage d'un premier élément de raccord, parmi ces éléments mâle et femelle est mobile, de sa première position radiale à sa deuxième position radiale, l'organe d'attelage du deuxième élément de raccord, parmi ces éléments mâle et femelle, est maintenu dans sa première position radiale par le clapet du deuxième élément de raccord.
- En configuration accouplée du raccord, le joint d'étanchéité du clapet de l'élément femelle et une partie du corps de l'élément mâle de raccord entourent radialement la jupe de l'élément femelle de raccord.

L'invention sera mieux comprise et d'autres avantages de celle-ci apparaîtront plus clairement à la lumière de la description qui va suivre, de plusieurs modes de réalisation d'un élément de raccord et d'un raccord conformes à son principe, donnée uniquement à titre d'exemple et faite en référence aux dessins annexés, dans lesquels :
- la figure 1 est une coupe axiale d'un raccord conforme à un premier mode de réalisation de l'invention, dont les éléments mâle et femelle sont désaccouplés, l'élément mâle de raccord étant lui-même conforme à l'invention ;
- la figure 2 est une vue en perspective de l'élément femelle du raccord de la figure 1 ;
- la figure 3 est une coupe analogue à la figure 1, à plus petite échelle, lorsque les éléments mâle et femelle de raccord sont dans une première configuration, en cours d'accouplement ;
- la figure 4 est une coupe transversale selon la ligne IV-IV à la figure 3 ;
- la figure 5 est une vue en perspective, à plus grande échelle que la figure 2, d'un équipage comprenant un clapet et une jupe appartenant au raccord des figures 1 à 4 ;
- la figure 6 est une coupe analogue aux figures 1 et 3 lorsque les éléments mâle et femelle de raccord sont dans une deuxième configuration, en cours d'accouplement ;
- la figure 7 est une coupe analogue aux figures 1, 3 et 6, lorsque les éléments mâle et femelle de raccord sont dans une troisième configuration, en cours d'accouplement ;
- la figure 8 est une coupe analogue aux figures 1, 3, 6 et 7 en configuration accouplée du raccord ;
- la figure 9 est une coupe analogue à la figure 1 pour un raccord conforme à un deuxième mode de réalisation de l'invention, dont l'élément mâle est également conforme à l'invention ;
- la figure 10 est une coupe analogue à la figure 9 en configuration accouplée du raccord du deuxième mode de réalisation ;
- la figure 11 est une vue en perspective d'une jupe appartenant au raccord des figures 9 et 10 ;
- la figure 12 est une coupe analogue à la figure 1 pour un raccord conforme à un troisième mode de réalisation de l'invention, dont l'élément femelle est également conforme à l'invention ;
- la figure 13 est une coupe transversale selon la ligne XIII-XIII à la figure 12 ;
- la figure 14 est une coupe analogue à la figure 12 lorsque les éléments mâle et femelle de raccord sont en cours d'accouplement ;
- la figure 15 est une vue à plus grande échelle du détail XV à la figure 14 ;
- la figure 16 est une coupe analogue à la figure 14, en configuration accouplée du raccord ;
- la figure 17 est une coupe analogue à la figure 1 pour un raccord conforme à un quatrième mode de réalisation de l'invention dont chacun des éléments mâle et femelle est également conforme à l'invention ;
- la figure 18 est une coupe transversale à plus petite échelle selon la ligne XVIII à la figure 16 ;
- la figure 19 une coupe transversale à plus petite échelle selon la ligne XIX à la figure 16 ;
- la figure 20 est une vue en perspective d'une jupe appartenant au raccord des figures 17 à 19 ;
- la figure 21 est une coupe analogue à la figure 17 lorsque les éléments mâle et femelle sont dans une première configuration, en cours d'accouplement ;
- la figure 22 est une coupe analogue à la figure 21 lorsque les éléments mâle et femelle de raccord sont dans une deuxième configuration, en cours d'accouplement ;
- la figure 23 est une coupe analogue aux figures 21 et 22 lorsque les éléments mâle et femelle sont en cours d'accouplement, dans une troisième configuration ;
- la figure 24 est une vue analogue aux figures 21, 22, et 23 en configuration accouplée du raccord ;
- la figure 25 est une coupe analogue à la figure 1 pour un raccord conforme à un cinquième mode de réalisation de l'invention, dont l'élément mâle est également conforme à l'invention ;
- la figure 26 est une coupe analogue à la figure 25 en cours d'accouplement des éléments du raccord du cinquième mode de réalisation ;
- la figure 27 est une vue à plus grande échelle du détail XXVII à la figure 26 ;
- la figure 28 est une coupe analogue à la figure 25 en configuration accouplée du raccord du cinquième mode de réalisation ;
- la figure 29 est une coupe analogue à la figure 1 pour un raccord conforme à un sixième mode de réalisation de l'invention, dont l'élément femelle est également conforme à l'invention ;
- la figure 30 est une coupe analogue à la figure 29 en configuration accouplée du raccord du sixième mode de réalisation ;
- la figure 31 est une coupe analogue à la figure 29 en cours de désaccouplement des éléments du raccord du sixième mode de réalisation ; et
- la figure 32 est une vue à plus grande échelle du détail XXXII à la figure 31.

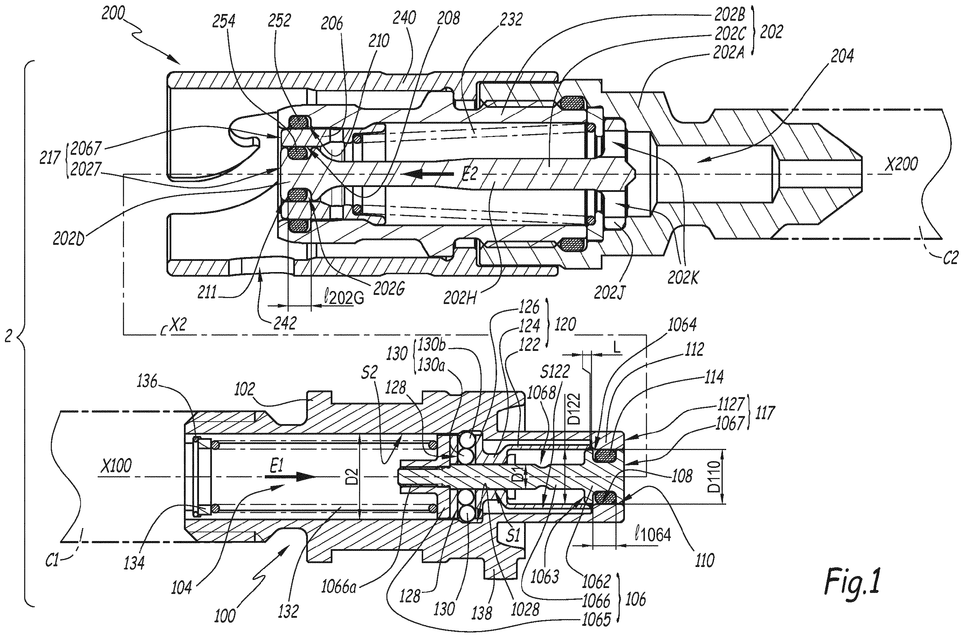

Le raccord 2 représenté aux figures 1 à 8 comprend un élément mâle de raccord 100 et un élément femelle de raccord 200 destinés à s'emmancher l'un dans l'autre selon un axe central X2 du raccord 2 pour la jonction amovible de canalisations de fluide sous pression.

En configuration d'utilisation, les éléments 100 et 200 sont respectivement raccordés à des canalisations C1 et C2 dans lesquelles circule un fluide sous pression, par exemple un gaz sous une pression supérieure à 200 bars, par exemple égale à 300 bars. Pour la clarté du dessin, les canalisations C1 et C2 sont représentées uniquement à la figure 1, en traits d'axe. Des canalisations du même type sont utilisées avec les éléments mâle et femelle des raccords des autres modes de réalisation et ne sont pas représentées. En configuration accouplée du raccord 2, le fluide peut circuler avec un débit important, par exemple supérieur à 80 litres par minute pour un diamètre de passage du fluide à l'intérieur du raccord de l'ordre de 8 mm.

L'élément mâle de raccord 100 est centré sur un axe longitudinal X100 qui est destiné à être confondu avec l'axe X2 en cours d'accouplement/désaccouplement et en configuration accouplée du raccord 2 et qui définit une direction avant-arrière de l'élément mâle de raccord 100. L'arrière de cet élément 100 est tourné vers la canalisation C1, alors que l'avant de cet élément est tourné vers l'élément femelle 200 en début d'accouplement.

L'élément femelle de raccord 200 est également centré sur un axe longitudinal X200 destiné à être confondu avec les axes X100 et X2 en cours d'accouplement/désaccouplement et en configuration accouplée du raccord. Cet axe X200 définit également une direction avant-arrière de l'élément 200, avec l'arrière de cet élément 200 tourné vers la canalisation C2 et l'avant de cet élément 200 tourné vers l'élément mâle de raccord 100 en début d'accouplement.

Dans ce qui suit, les adjectifs « axial » et « radial » s'appliquent en relation avec l'axe X100 lorsqu'il s'agit de l'élément mâle de raccord 100 et en relation avec l'axe X200 lorsqu'il s'agit de l'élément femelle de raccord 200. Ainsi, par exemple, une longueur ou une distance est dite « axiale » lorsqu'elle est parallèle à l'axe considéré, alors qu'une surface est dite « axiale » lorsqu'elle est perpendiculaire à cet axe et « radiale » lorsqu'elle est perpendiculaire à un rayon passant par cet axe. Une direction est dite centripète, respectivement centrifuge, lorsqu'elle est radiale et convergente, respectivement radiale et divergente, par rapport à cet axe. Ceci vaut également pour les autres modes de réalisation. L'élément mâle de raccord 100 comprend un corps 102 qui est représenté monobloc sur les figures mais peut être constitué de plusieurs parties assemblées entre elles. Ce corps 102 est centré sur l'axe X100 et percé d'un alésage central 104 qui définit un conduit de circulation de fluide à l'intérieur de l'élément mâle de raccord 100, ce conduit étant obturé par un clapet 106 équipé d'un joint d'étanchéité qui vient en contact étanche contre un siège 108 en configuration désaccouplée du raccord 2. Ce siège 108 est ménagé sur une surface radiale interne 110 du corps 102, elle-même disposée au niveau d'une extrémité avant 112 de l'élément mâle de raccord 100. On note D110 le diamètre de la surface 110 qui est circulaire. Le clapet 106 comprend une partie avant 1062 de diamètre extérieur D6.

La partie 1062 est équipée d'une gorge périphérique externe 1064 dans laquelle est reçu un joint torique d'étanchéité en élastomère 114 qui vient en contact étanche contre le siège 108 en configuration fermée de l'élément mâle de raccord 100 en étant comprimé radialement entre le siège 108 et le clapet 106. On note ℓ1064 la largeur de la gorge 1064, c'est-à-dire la dimension axiale de cette gorge.

Le clapet 106 comprend également une tige 1066 qui est monobloc avec la partie 1062 et qui la prolonge vers l'arrière, c'est-à-dire à l'opposé d'une face avant 117 de l'élément mâle de raccord 100. Une surface de butée arrière 1063 délimite la partie 1062 sur l'arrière.

On note 1067 la face avant du clapet 106, laquelle est en forme de disque centré sur l'axe X100. On note 1127 la face avant de l'extrémité 112, qui est en forme d'anneau centré sur l'axe X100. Les faces avant 1067 et 1127 constituent ensemble la face avant 117. En configuration désaccouplée du raccord, les faces avant 1067 et 1127, qui sont perpendiculaires à l'axe X100, sont planes et affleurantes l'une avec l'autre, de sorte que la face avant 117 est plane.

On note L1062 la longueur axiale de la partie 1062. La longueur L1062 est mesurée le long de l'axe longitudinal X100, entre la surface de butée arrière 1063 et la face avant 1067.

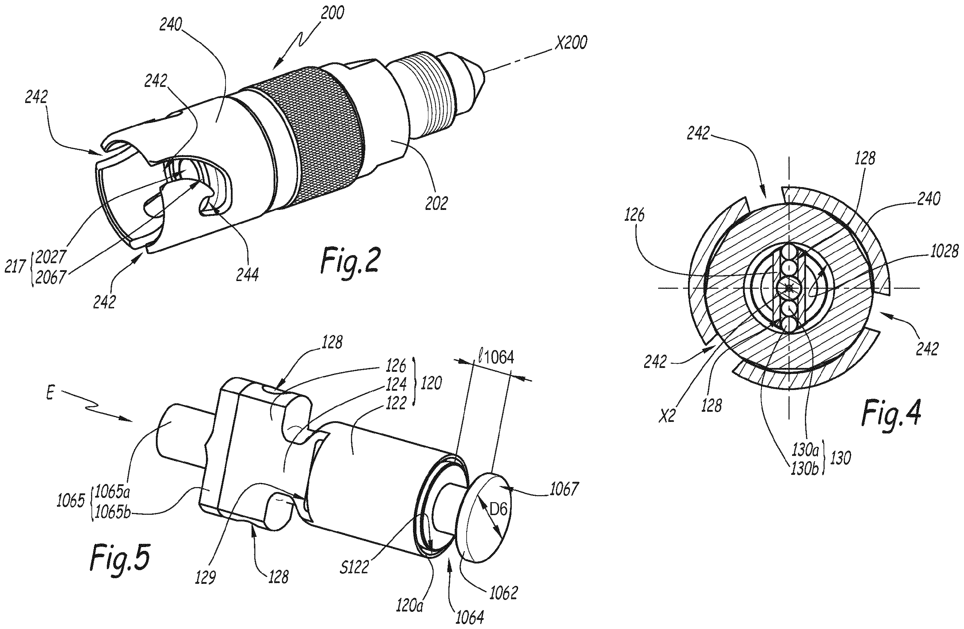

A l'opposé de la partie 1062, la tige 1066 est pourvue d'un filetage 1066a sur lequel est vissé un écrou 1065 qui comprend une portion circulaire taraudée 1065a et une plaquette 1065b qui s'étend globalement selon deux directions radiales opposées par rapport à la partie taraudée 1065a et qui est monobloc avec la partie 1065a. La géométrie de l'écrou 1065 ressort de la comparaison des figures 1 et 5.

La tige 1066 est équipée d'une gorge périphérique externe 1068 qui constitue un logement en creux, radialement en direction de l'axe X100, par rapport à la surface radiale externe de la tige 1066. On note D1 le diamètre de la tige 1066 en dehors de la gorge 1068, ce diamètre étant strictement inférieur au diamètre D6. En d'autres termes, la partie avant présente une épaisseur radiale, par rapport à l'axe X100, qui est supérieure à celle de la tige 1066, ces épaisseurs radiales correspondant, dans l'exemple, aux rayons de ces parties, c'est-à-dire respectivement à la moitié du diamètre D6 et à la moitié du diamètre D1.

Le joint 114 n'est pas représenté à la figure 5, afin de permettre une meilleure visualisation de la gorge 1064.

On note S1 la partie de la surface radiale externe de la tige 1066 située entre le filetage 1066a et la gorge annulaire 1068. Cette surface S1 est cylindrique à section circulaire et de diamètre D1.

Une jupe 120, réalisée sous la forme d'une bague, est montée autour du clapet 106 et comprend une portion tubulaire 122, à section circulaire dont on note D122 le diamètre intérieur, lequel est égal au diamètre D110, et S122 la surface radiale interne qui est cylindrique à section circulaire. La jupe 120 comprend également une portion de liaison 124 qui relie la partie tubulaire 122 à une patte arrière 126 de la jupe 120, la portion 124 et la patte arrière sont percées d'un trou central axial pour le passage de la tige 1066. Dans la patte arrière 126 sont définis deux logements 128 qui s'étendent selon le même axe Y128 radial à l'axe X100 et qui sont traversants, c'est-à-dire qu'ils débouchent chacun à la fois à l'intérieur de la jupe 100 en direction de l'axe longitudinal central X100 et à l'extérieur de celle-ci, selon une direction radiale parallèle à l'axe Y128.

On note L122 la longueur axiale de la surface S122. La longueur axiale L122 est définie entre un bord avant 120a de la jupe 120 et un épaulement interne 123 de la jupe ménagée à la jonction des portions 122 et 124. Cette longueur L122 est strictement supérieure à la longueur L1062, de préférence supérieure ou égale au double de la longueur L1062.

La jupe 120 est également pourvue de deux découpes 129 qui s'étendent, de part et d'autre de l'axe X100 en configuration montée de l'élément mâle de raccord 100, à la jonction entre les portions 122 et 124 et qui permettent d'évacuer du fluide présent dans le volume intérieur de la portion tubulaire 122 en cas de mouvement relatif entre la jupe 120 et le clapet 106 dans un sens de rapprochement des parties 124 et 1062.

Le clapet 106 et la jupe 120 constituent ensemble un équipage E interne à l'élément mâle de raccord 100, qui est représenté en perspective à la figure 5.

Une paire 130 de billes 130a et 130b, alignées selon une direction radiale à l'axe X100, est disposée dans chaque logement 128. Dans chaque paire de billes 130, on note 130a la bille la plus proche de la tige 1066 et 130b la plus éloignée. En pratique, chaque logement radial 128 est un perçage à section circulaire ménagé dans la collerette 126 avec un diamètre légèrement supérieur au diamètre des billes 130a, 130b qu'il reçoit. Chaque bille 130a, 130b est donc solidaire axialement de la jupe 120.

La dimension radiale de chaque paire de billes 130 est supérieure à la hauteur radiale de chaque logement 128, c'est-à-dire à la dimension de ce logement mesurée radialement à l'axe X100. En pratique, lorsque les billes 130a et 130b ont le même diamètre, comme dans l'exemple des figures, le diamètre des billes 130a et 130b est choisi strictement supérieur à la moitié de la hauteur radiale de chaque logement 128. Chaque paire de billes 130 disposée dans un logement 128 dépasse ainsi en permanence de ce logement, soit radialement vers l'extérieur, soit radialement vers l'intérieur en direction de l'axe X100, par rapport à la patte arrière 126. Chaque paire de billes 130 constitue un organe d'attelage de la jupe 220 au corps 102 ou au clapet 106, ainsi qu'il ressort des explications qui suivent.

Un ressort 132 est en appui, sur l'avant, contre la plaquette 1065b, ainsi que, sur l'arrière, contre une bague 134 bloquée vers l'arrière dans le corps 102 au moyen d'un circlip 136. Ce ressort 132 exerce sur la plaquette 1065b, donc sur le clapet 106, un effort axial E1 dirigé vers l'avant qui tend à ramener le clapet 106 vers sa position de fermeture du conduit 104, au niveau de l'extrémité avant 112.

Le corps 102 est pourvu d'une gorge périphérique radiale interne 1028 destinée à recevoir une partie de chacune des billes 130b. On note S2 la surface radiale interne du corps 2 qui définit l'alésage 104 à l'arrière de la gorge 1028. On note D2 le diamètre de cette surface S2 qui est cylindrique à section circulaire. Ce diamètre D2 est inférieur au diamètre de fond de gorge de la gorge 1028. Ainsi, la gorge 1028 s'étend en creux, radialement à l'opposé de l'axe X100, par rapport à la surface S2. La surface S2 est disposée, le long de l'axe X100, entre la gorge 1028 et la bague 134 en appui contre le circlip 136.

Le corps 102 est équipé de trois ergots 138 qui s'étendent radialement en saillie par rapport au reste du corps 102 et dont un seul est visible sur les figures, étant précisé que ces trois ergots 138 sont régulièrement répartis autour de l'axe X100.

L'élément femelle 200 comprend un corps 202 centré sur l'axe X200 et qui est pourvu d'un alésage central 204 formant un conduit de passage de fluide sous pression. Le corps 202 est multipartite et comprend deux éléments tubulaires 202A et 202B, ainsi qu'un poussoir central fixe 202C. Le poussoir central fixe 202C comprend une extrémité avant ou tête 202D, une tige centrale 202H qui s'étend le long de l'axe X200 et une collerette arrière 202J, percée de passages 202K pour le fluide et qui est immobilisée axialement par serrage axial entre les éléments tubulaires 202A et 202B. On note 2027 la face avant du poussoir 202C.

L'élément femelle de raccord 200 comprend également un clapet 206 qui est monté mobile axialement autour du poussoir central fixe 202C, radialement à l'intérieur de l'élément tubulaire 202B et qui est chargé élastiquement vers une position de fermeture par un ressort 232 intercalé entre le clapet 206 et le corps 202 et qui exerce un effort axial E2.

On note 2067 la face avant annulaire du clapet 206. En configuration désaccouplée du raccord, les faces avant 2027 et 2067, qui sont planes et perpendiculaires à l'axe X200, sont affleurantes l'une avec l'autre, de sorte que la face avant 217 de l'élément femelle de raccord 200 constituée par les faces avant 2067 et 2027 est plane, radialement à l'intérieur de l'élément tubulaire 202B.

Le corps 202 est équipé de deux joints toriques en élastomère 252 et 254 installés respectivement dans une gorge périphérique interne au niveau d'une surface périphérique radiale interne 210 de l'élément tubulaire 202B et dans une gorge périphérique externe 202G ménagée au niveau d'une surface périphérique radiale externe 211 de l'extrémité avant ou tête 202D du poussoir central fixe 202C.

Dans la position de fermeture du clapet 206, les joints d'étanchéité 252 et 254 sont comprimés radialement entre le corps 202 et le clapet 206.

On note L202D la longueur axiale de la tête 202D, mesurée entre la face avant 2027 et un bord arrière 202F de la gorge 202G.

La longueur L122 est supérieure ou égale à la somme des longueurs L1062 et L202D. Ceci permet à la jupe 120 d'accommoder la partie avant 1062 et la tête 202D dans le volume intérieur de la portion tubulaire 122.

L'élément femelle de raccord 200 comprend également une bague 240 qui est montée rotative autour du corps 202, par rapport à l'axe X200 et qui est équipée de trois rainures 242 destinée à recevoir chacune un ergot 138 qui se déplace à l'intérieur de la rainure en cours d'accouplement des éléments mâle et femelle de raccord 100 et 200, jusqu'à parvenir au niveau d'un siège 244 prévu au fond de chaque rainure. La bague 240 est maintenue axialement par rapport au corps 202 entre les éléments tubulaires 202A et 202B.

Le fonctionnement du raccord 2 est le suivant :
En configuration désaccouplée, représentée à la figure 1, la jupe 120 est repoussée, par la plaquette 1065a soumise à l'effort élastique E1 qui vient au contact de la patte arrière 126, en direction de l'avant au point que sa patte 126 vient en butée avant contre un épaulement interne 1022 du corps 102. L'épaulement 1022 délimite la gorge annulaire 1028 sur l'avant. Dans cette configuration, le bord avant 120a de la jupe 120, c'est-à-dire le bord de la portion tubulaire 122 opposé à la portion de liaison 124, n'est pas en contact avec l'extrémité avant 112 du corps 102. En d'autres termes, en configuration désaccouplée, une distance L, mesurée axialement entre le bord 120a et un épaulement interne 1024 du corps 102, qui délimite l'extrémité 112 vers l'arrière et qui délimite vers l'avant une portion du conduit 104 de diamètre interne supérieur au diamètre D110, est non nulle et peut varier légèrement compte-tenu des tolérances de fabrication et des frottements.

Dans cette configuration, le clapet 106 est en position de fermeture de l'élément mâle de raccord 100. En particulier, le joint 114 coopère de manière étanche avec la surface 110, au niveau du siège 108.

Dans cette configuration désaccouplée, les billes 130a sont en appui sur la surface S1, de sorte qu'elles repoussent les billes 130b radialement vers l'extérieur, dans la gorge 1028 qui forme un logement de réception de la partie externe de chaque bille 130b. La jupe 120 est ainsi solidarisée par les deux paires de billes 130, en translation selon l'axe X100, avec le corps 102 et la jupe 120 est dégagée axialement par rapport au joint 114.

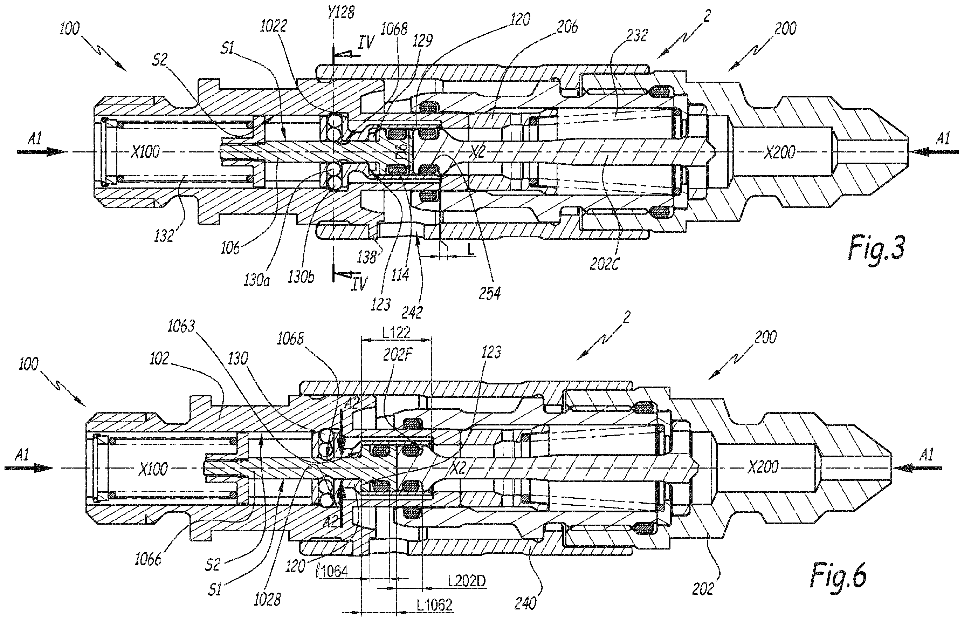

Au début de l'accouplement des éléments mâle et femelle 100 et 200, ces éléments de raccord sont alignés sur l'axe X2, puis sont rapprochés l'un de l'autre dans le sens des flèches A1 à la figure 3. Ceci a pour effet d'amener la face avant 2027 du poussoir central fixe 202C au contact de la face avant 1067 du clapet 106, alors que la face avant 1127 du corps mâle est amenée au contact de la face avant 2067 du clapet 206.

En poursuivant le mouvement d'accouplement, et en même temps que le poussoir central fixe 202C pénètre dans l'extrémité avant 112 du corps 102, les joints 252 et 254 viennent respectivement en appui contre les surfaces radiales externe et interne de cette extrémité 112. En particulier, avec le joint 252, l'étanchéité est donc prise entre le corps 202 et le corps 102.

Au cours de l'accouplement des éléments mâle et femelle 100 et 200, le poussoir fixe 202C vient au contact du clapet 106 et le clapet 106 est repoussé par le poussoir fixe 202C vers l'arrière de l'élément mâle de raccord 100, vers sa position d'ouverture, à l'encontre de l'effort E1, au point que sa partie avant 1062C s'engage dans la portion tubulaire 122 de la jupe 120 qui ne peut pas reculer par rapport au corps 102 puisqu'elle est solidarisée axialement à celui-ci par les billes 130b. Ceci est possible, notamment, grâce au fait que les diamètres D110 et D122 sont égaux. Au fur et à mesure de la progression du clapet 106 vers l'arrière de l'élément mâle de raccord 100, le joint 114 pénètre à l'intérieur de la jupe 120, au point qu'il est protégé contre la pression du fluide éventuellement contenu dans l'élément mâle 100 et contre le débit de fluide destiné à circuler dans le raccord 2 lorsque les éléments mâle et femelle 100 et 200 sont effectivement accouplés.

Au cours du mouvement de coulissement du clapet 106 vers l'arrière du corps 102, du fait de l'immobilisation axiale relative des éléments 120 et 102 par les paires de billes 130 en prise dans la gorge 1028, la distance L est en permanence inférieure ou égale à la moitié de la largeur ℓ1064, de préférence inférieure ou égale au tiers de la largeur ℓ1064. Ainsi, la valeur maximale Lₘₐₓ de la distance L est, lorsque les paires de billes 130 sont dans leur première position radiale, inférieure ou égale à ℓ1064/2, de préférence à ℓ1064/3. Ceci peut être obtenu grâce à un choix approprié des dimensions axiales de la jupe 120 par rapport aux dimensions axiales du corps 102 et du clapet 106.

Comme la valeur Lₘₐₓ est inférieure ou égale à la moitié de la largeur ℓ1064, de préférence inférieure ou égale au tiers de la largeur ℓ1064, le joint 114 ne risque pas d'être chassé de la gorge 1064 par la pression du fluide lors du passage du joint 114 de l'intérieur de l'extrémité 112 à l'intérieur de la jupe 120. Au cours de la première phase de déplacement du clapet 106 vers l'arrière du corps 102, la jupe 120 reste fixe, le long de l'axe X100, par rapport au corps 102 puisqu'elle est attelée, par l'intermédiaire des deux paires de billes 130, à ce corps 102, dans la mesure où les billes externes 130b sont bloquées dans la gorge 1028 par les billes 130a et par la surface S1 qui se déplace axialement relativement aux billes 130a, 130b.

La poursuite du mouvement d'emmanchement a pour effet que le joint 254 quitte la partie 112, alors que le clapet 206 est repoussé dans le corps 202, ce qui ouvre la communication de fluide entre les deux éléments 100 et 200 du raccord 2, pour faire pénétrer complètement la tête 202D du poussoir central fixe 202C à l'intérieur de la jupe 120, toujours en appui contre le clapet 106, au point que les joints 114 et 254 sont recouverts, radialement par l'extérieur, par la jupe 120. Ceci est possible, notamment, du fait de la relation L122 ≥ L1062 + L202D mentionnée ci-dessus.

La valeur maximale Lₘₐₓ de la distance L est inférieure ou égale à la moitié de la largeur ℓ202G de la gorge 202G, de préférence inférieure ou égale au tiers de la largeur ℓ202G. Ceci garantit également que le joint 254 reste protégé de la pression du fluide et n'est pas extrait de sa gorge 202G sous l'action du fluide.

On atteint alors la configuration des figures 3 et 4 où, par rapport à la configuration de la figure 1, les billes internes 130a ont glissé ou roulé le long de la surface S1, alors que les billes externes 130b sont restées engagées dans la gorge 1028.

Au cours du mouvement permettant de passer de la configuration de la figure 1 à celle des figures 3 et 4, les ergots 138 ont progressé dans les rainures 242, avec un fonctionnement en baïonnette facilité par la possibilité de rotation de la bague 240 autour du corps 202.

En poursuivant encore le mouvement d'accouplement, on parvient dans la configuration de la figure 6 où la surface de butée arrière 1063 de la partie avant 1062 du clapet 106 est parvenue en butée contre l'épaulement interne 123. En d'autres termes, le clapet 106 parvient en butée axiale, sur l'arrière, contre la jupe 120.

Dans cette configuration, représentée à la figure 6, le déplacement du clapet 106 à l'intérieur du corps 102 a eu pour effet d'amener la gorge 1068 en regard des paires de billes 130, ce qui supprime l'effort centrifuge exercé précédemment par la surface S1 sur ces billes.

Avec la poursuite du mouvement d'emmanchement, les billes 130a et 130b peuvent ainsi avoir, dans leur logement 128 et par rapport au corps 102, un mouvement centripète représenté par les flèches A2 à la figure 6, ce qui engage les billes 130a dans la gorge 1068.

Le mouvement d'accouplement des éléments 100 et 200 se poursuit alors du fait de la progression des ergots 138 à l'intérieur des rainures 242, ce qui a pour effet de repousser encore le clapet 106 vers l'arrière de l'élément mâle de raccord 100. Ce mouvement de recul supplémentaire du clapet 106 est possible du fait que les billes externes 130b peuvent quitter la gorge 1028, que les billes 130a peuvent venir se loger dans la gorge 1068 et que les billes externes 130b peuvent coulisser ou rouler le long de la surface S2. Cette surface S2 exerce sur les paires de billes 130 un effort centripète, dans le sens des flèches A2 mentionnées précédemment, qui a pour effet de bloquer les paires de billes 130 dans la gorge 1068. La partie radiale interne des billes 130a qui est engagée dans la gorge 1068 solidarise axialement les éléments 106 et 120. Ainsi, dans cette configuration, les paires de billes 130 solidarisent axialement la jupe 120 et le clapet 106.

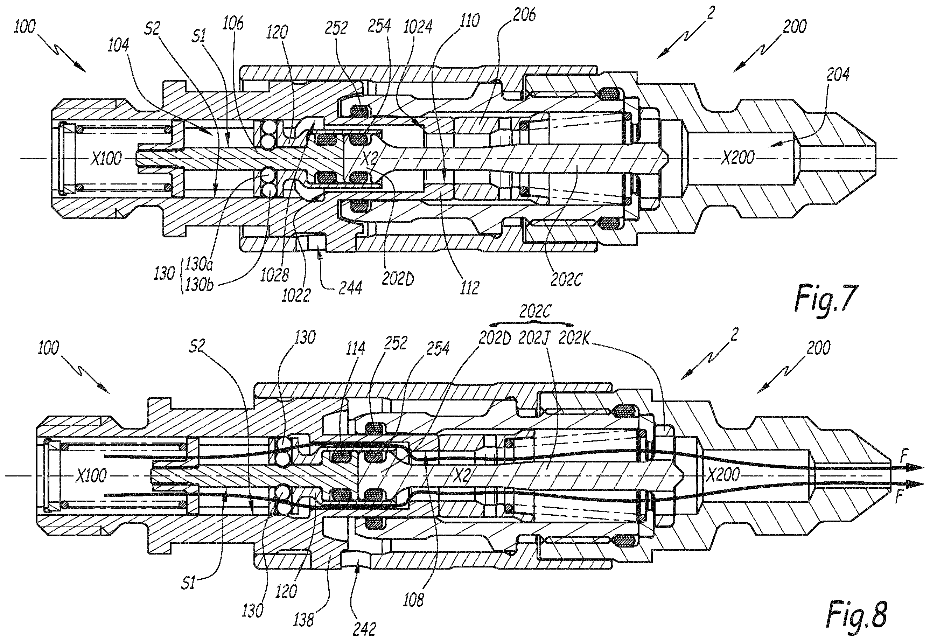

Lorsque les ergots 138 parviennent au fond des rainures 242, le clapet 106 et la jupe 120 ont atteint leur position arrière maximale à l'intérieur du corps 102, alors que le clapet 206 a atteint sa position arrière maximale à l'intérieur du corps 202. C'est la configuration représentée à la figure 7.

Du fait de la rotation de la bague 240 autour du corps 202 et des effets de répulsion dus aux efforts des ressorts 132 et 232, les ergots 138 sont guidés vers les sièges 244, ce qui induit un court déplacement en sens inverse permettant d'atteindre la configuration de la figure 8, où les éléments mâle et femelle de raccord 100 et 200 sont accouplés en étant verrouillés ensemble grâce au mécanisme à baïonnette 138/242 de manière que les éléments de raccord 100 et 200 ne peuvent être écartés l'un de l'autre. Le clapet 106 est dans sa position d'ouverture, le fluide peut circuler entre les deux éléments de raccord. Les paires de billes 130 solidarisent axialement la jupe 120 et le clapet 106 dans une configuration où cette jupe protège efficacement les joints 114 et 254 contre la pression et le débit de la veine fluide principale représentée par les flèches F sur cette figure 8, la jupe 120 étant intercalée radialement entre ces joints et cette veine fluide et recouvrant complètement, radialement par l'extérieur, les gorges 1064 et 202G, et donc les joints 114 et 254, de sorte que les joints 114 et 254 sont comprimés radialement entre le clapet 206, respectivement le poussoir 202C, et la jupe 120. La jupe 120 est en retrait axialement vers l'arrière par rapport à l'extrémité avant 112 du corps 102, de sorte qu'elle ne gêne pas l'écoulement de la veine fluide représentée par les flèches F qui s'effectue autour de la jupe 120.

Le désaccouplement a lieu selon une manœuvre inverse de celle mentionnée ci-dessus. Ce désaccouplement commence par une surcourse dans le sens des flèches A1, pour libérer les ergots 138 des sièges 244 et engager ces ergots dans les rainures 242 en direction de leurs embouchures respectives. Ensuite, l'élément mâle de raccord 100 est retiré de l'élément femelle de raccord 200. Les efforts E1 et E2 contribuent à écarter les éléments de raccord 100 et 200 l'un de l'autre en repoussant les clapets 106 et 206 vers leur position de fermeture respective. Au début de ce mouvement de retrait, la jupe 120, qui est solidaire du clapet 106 du fait de l'action des billes d'attelage 130a, suit le mouvement de ce clapet en appui sur le piston central fixe 202C, le clapet étant repoussé par l'effort élastique E1 du ressort 132, qui agit sur le clapet 106 et sur la jupe 120, alors que le clapet 206 est repoussé par l'effort élastique E2 du ressort 232. Du fait de ce mouvement, la jupe 120 se déplace vers l'avant de l'élément mâle de raccord 100 et les billes 130b parviennent en regard de la gorge 1028, alors que la jupe 120 parvient à nouveau en butée sur l'avant contre l'épaulement 1022. La poursuite du retrait de l'élément mâle de raccord 100 par rapport à l'élément femelle de raccord 200, avec le clapet 106 repoussé par le ressort 132, amène la surface S1 de la tige 1066 en regard des billes 130a, ce qui a pour effet d'engager à nouveau les billes 130b dans la gorge 1028, selon un mouvement centrifuge inverse du mouvement représenté par les flèches A2. Ceci revient à solidariser axialement la jupe 120 et le corps 102. Dans cette configuration qui correspond approximativement à celle de la figure 3, les joints 114 et 254 sont encore recouverts par la jupe 120. Ils sont donc protégés contre l'action du fluide présent dans les conduits 104 et 204.

La poursuite du mouvement de désaccouplement a lieu grâce à un mouvement du clapet 106 en appui sur le poussoir central fixe 202C, sous l'action de l'effort E1, et du mouvement du clapet 206 en appui contre l'extrémité 112, sous l'action de l'effort E2, alors que la jupe 120 reste en butée contre l'épaulement 1022, ce qui est possible puisque les éléments 106 et 120 ne sont alors plus solidaires axialement.

La tête 202D du poussoir central fixe 202C finit alors par sortir de la jupe 120 pour parvenir au niveau de l'extrémité 112, ce qui interrompt la circulation de fluide dans le raccord 2. La partie avant 1062 du clapet 106 finit ensuite par sortir de la jupe 120 pour parvenir au niveau de l'extrémité 112, au point que le joint 114 vient en contre le siège 108, ce qui assure l'étanchéité de la fermeture de l'élément mâle de raccord 100. Ce mouvement de fermeture de l'élément de raccord 100 a lieu sans risque d'expulsion du joint 114 de la gorge 1064 du fait de la relation L ≤ ℓ1064/2 ou L≤ ℓ1064/3. Le clapet 206 parvient au niveau de tête 202D du poussoir central fixe 202C au point que le joint 254 vient en contact étanche contre le clapet 206 et le joint 252 vient en contact étanche contre l'élément 202B, ce qui assure l'étanchéité de la fermeture de l'élément femelle de raccord 200.

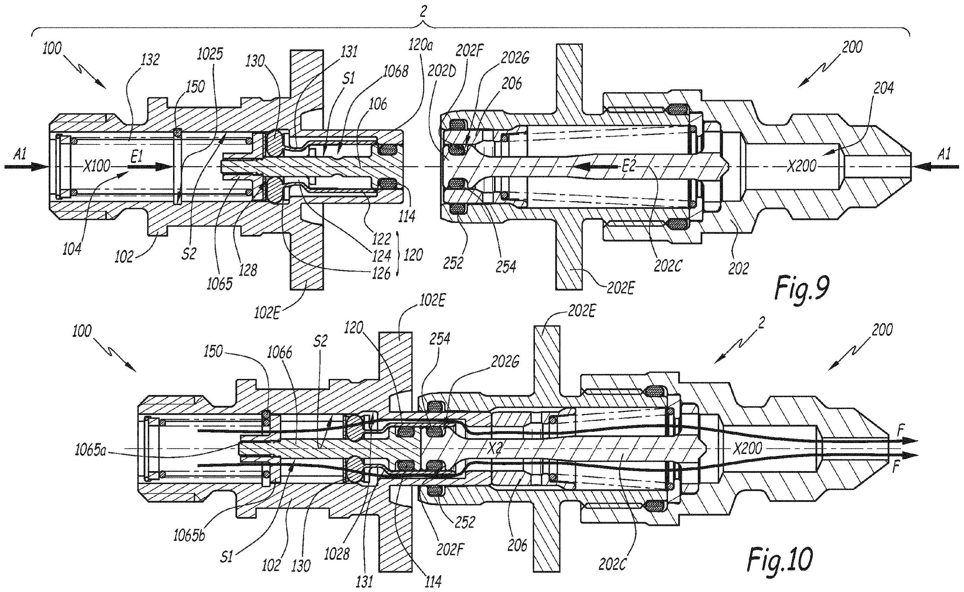

Dans les modes de réalisation des figures 9 et suivantes, les éléments analogues à ceux du premier mode de réalisation portent les mêmes références.

En ce qui concerne le deuxième mode de réalisation représenté aux figures 9 à 11, on décrit principalement ce qui distingue ce mode de réalisation du précédent.

Dans ce mode de réalisation, la jupe 120 est monobloc avec deux organes d'attelage 130 formés par des marteaux disposés à l'intérieur de logements radiaux traversants 128 d'une patte arrière 126 de la jupe. Les marteaux 130 sont reliés à la portion tubulaire 122 de la jupe 120 chacun par une languette 131 élastiquement déformable dans une direction radiale.

La dimension radiale des marteaux 130 est supérieure à la hauteur radiale des logements 128, de sorte que ces marteaux s'engagent sélectivement soit dans une gorge 1028 ménagée dans le corps 102 de l'élément mâle de raccord 100, soit dans une gorge 1068 ménagée à la périphérie de la tige 1066 du clapet 106 de cet élément mâle de raccord.

Pour le reste, une première surface de blocage S1 est définie à la périphérie de la tige 1066, à l'arrière de la gorge 1068, alors qu'une deuxième surface de blocage S2 est définie par le corps 102, à l'arrière de la gorge 1028, cette surface de blocage S2 délimitant l'alésage 104 du corps 102 qui forme un conduit d'écoulement de fluide en configuration accouplée du raccord représenté à la figure 10 où les flèches F représentent la veine fluide. Pendant l'accouplement, les marteaux 130 sont maintenus engagés dans la gorge 1028 par la surface de blocage S1 du clapet 106 alors que le clapet 106 est repoussé vers l'arrière de l'élément mâle 100 par le poussoir 202C de l'élément femelle 200. La gorge 1068 parvient en regard des marteaux 130 alors que les joints 114 et 254 sont recouverts radialement par la jupe 120. La poursuite du mouvement d'emmanchement A1 associée à l'élasticité de chaque languette 131 qui tend à rappeler les marteaux 130 en direction de l'axe X100 font que les languettes 131 se déforment radialement et que les marteaux 130 s'engagent dans la gorge 1068. La jupe 120 et le clapet 106 sont alors déplacés ensemble axialement vers la position d'ouverture du clapet 106, avec les marteaux 130 maintenus dans la gorge 1068 par la surface de blocage S2 du corps. En cours d'accouplement et dans cette configuration accouplée, les joints 114 et 254, qui appartiennent respectivement aux éléments mâle et femelle de raccord 100 et 200, sont protégés vis-à-vis de la veine fluide par la jupe 120 dont la portion tubulaire 122 est intercalée radialement entre ces joints et cette veine fluide.

Dans ce mode de réalisation, les corps 102 et 202 sont chacun montés sur une plaque 102E, respectivement 202E. Ces plaques sont rapprochées pour exercer un effort d'emmanchement sur les éléments mâle et femelle de raccord 100, dans le sens des flèches A1 à la figure 9, et maintenues l'une par rapport à l'autre en configuration accouplée, sans qu'il soit prévu un dispositif de verrouillage dans le raccord comme le dispositif à baïonnette du premier mode de réalisation. En particulier, ce mode de rapprochement se fait sans surcourse.

Conformément à un aspect avantageux de l'invention transposable aux modes de réalisation mentionnés ci-après, il est prévu, en arrière du clapet 106, une butée 150 qui limite le mouvement de recul du clapet 106 vers l'arrière. Cette butée 150 est formée par un circlip engagé dans une rainure périphérique interne 1025 du corps 102. Cette rainure 1025 débouche dans l'alésage 104. Cette butée 150 est positionnée, le long de l'axe X100 de façon à recevoir en appui la plaquette 1065b de l'écrou 1065 en configuration accouplée du raccord. Il est ainsi garanti que, une fois la jupe 120 attelée au clapet 106, c'est-à-dire une fois que la jupe 120 protège les joints 114 et 254, la pression à l'intérieur du raccord 2 ne risque pas d'entraîner l'équipage formé de la jupe 120 et du clapet 106 vers l'arrière de l'élément mâle de raccord 100, au point de découvrir le joint 254. Ainsi, la jupe 120 ne peut pas être déplacée vers une position axiale où elle ne recouvre pas le joint 254. En pratique, la butée 150 est positionnée, le long de l'axe X100, de telle sorte que la jupe 120 attelée au clapet 106 ne peut pas être déplacée vers une position où elle ne recouvre pas le joint 254.

Plus précisément on peut définir une distance axiale maximum de recul pour l'équipage formé de la jupe 120 et du clapet 106 une fois ces éléments attelés. Cette distance axiale maximum doit être inférieure ou égale à la longueur de « découvrement » du deuxième joint 254 par la jupe 120 lorsque la jupe 120 et le clapet 106 sont attelés. La longueur de « découvrement » du deuxième joint 254 est définie axialement entre le bord avant 120a de la jupe 120 et le bord arrière 202F de la gorge 202G qui entoure la tête 202D et dans laquelle est reçu le joint 254.

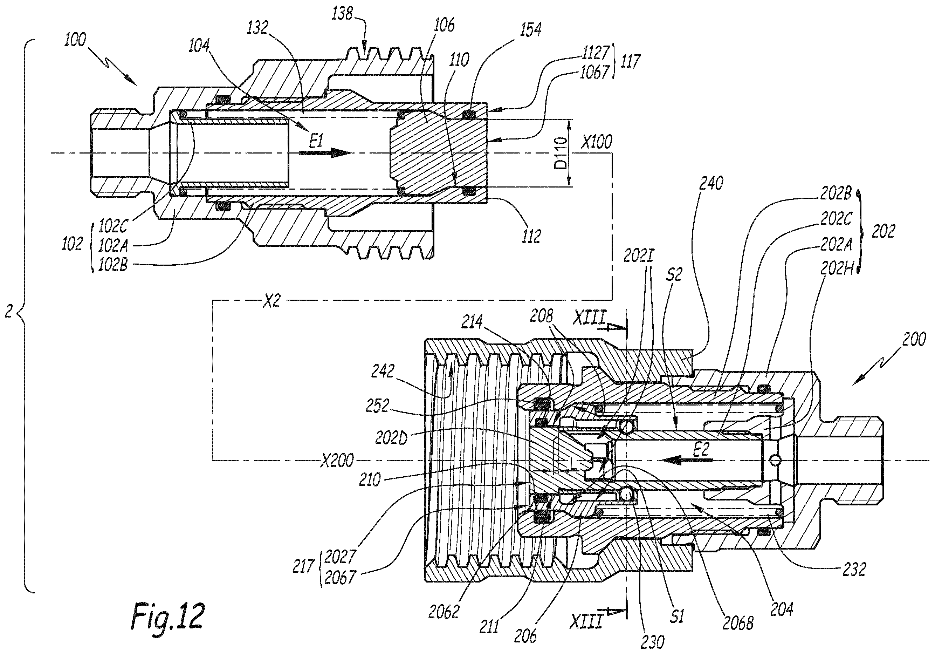

Le raccord 2 du troisième mode de réalisation représenté aux figures 12 à 16 comprend un élément mâle de raccord 100 et un élément femelle de raccord 200 destinés à s'emmancher l'un dans l'autre selon un axe central X2 du raccord 2.

L'élément mâle de raccord 100 est centré sur un axe longitudinal X100 qui est destiné à être confondu avec l'axe X2 en cours d'accouplement/désaccouplement et en configuration accouplée du raccord 2 et qui définit une direction avant/arrière de l'élément mâle de raccord. L'arrière de cet élément 100 est tourné vers une canalisation non représentée raccordée sur cet élément 100, alors que l'avant de cet élément est tourné vers l'élément femelle 200 en début d'accouplement.

L'élément femelle de raccord 200 est également centré sur un axe longitudinal X200 destiné à être confondu avec les axes X100 et X2 en cours d'accouplement/désaccouplement et en configuration accouplée du raccord. Cet axe X200 définit également une direction avant-arrière de l'élément 200, avec l'arrière de cet élément 200 tourné vers une canalisation raccordée sur cet élément et l'avant de cet élément 200 tourné vers l'élément mâle de raccord 100 en début d'accouplement.

L'élément mâle de raccord 100 comprend un corps 102 qui est formé de deux éléments tubulaires 102A et 102B et d'un manchon interne 102C. L'élément 102A est pourvu d'un filetage externe 138. Le corps 102 est centré sur l'axe X100 et percé d'un alésage central 104 qui définit un conduit de circulation de fluide à l'intérieur de l'élément mâle de raccord 100, ce conduit étant obturé par un clapet 106 en position de fermeture de l'alésage central 104 en configuration désaccouplée du raccord 2. Pour ce faire, une extrémité avant 112 de l'élément mâle de raccord 100 est pourvue d'une gorge radiale interne 155 dans laquelle est logé un joint torique d'étanchéité en élastomère 154. En configuration fermée de l'élément mâle de raccord 100, le joint 154 est en contact étanche avec une surface radiale interne 110 du corps 102 en étant comprimé radialement entre le clapet 106 et l'extrémité avant 112 du corps 102. On note ℓ155 la largeur axiale de la gorge 155. On note D110 le diamètre de la surface 110 au niveau de sa portion où est ménagée la gorge 155. On note D6 le diamètre de la surface externe du clapet 106 avec laquelle coopère le joint 154 en position de fermeture du clapet 106.

En configuration fermée de l'élément mâle de raccord 100, le joint 154 vient en appui contre le clapet 106.

On note 1067 la face avant du clapet 106, laquelle est en forme de disque centré sur l'axe X100. On note 1127 la face avant de l'extrémité 112, qui est en forme d'anneau centré sur l'axe X100. Les faces avant 1067 et 1127 constituent ensemble la face avant 117 de l'élément mâle de raccord 100. En configuration désaccouplée du raccord, les faces avant 1067 et 1127, qui sont perpendiculaires à l'axe X100, sont planes et affleurantes l'une avec l'autre, de sorte que la face avant 117 est plane.

Un ressort 132 est en appui, sur l'avant, contre l'arrière du clapet 106 ainsi que, sur l'arrière, contre une collerette périphérique du manchon 102C. Ce ressort 132 exerce sur le clapet 106 un effort élastique E1 dirigé vers l'avant qui tend à ramener le clapet 106 vers sa position de fermeture du conduit 104, au niveau de l'extrémité avant 112.

L'élément femelle 200 comprend un corps 202 centré sur l'axe X100 et qui est pourvu d'un alésage central 204 formant un conduit de passage de fluide sous pression. Le corps 202 est multipartite et comprend deux éléments tubulaires 202A, 202B, ainsi qu'un poussoir central fixe 202C immobilisé par vissage sur un manchon 202H qui fait également partie du corps 202 et qui est lui-même serré axialement entre les éléments tubulaires 202A et 202B. Le poussoir central fixe 202C comprend une partie avant ou tête pleine 202D à l'arrière de laquelle sont ménagés plusieurs passages radiaux 202İ permettant l'écoulement du fluide de ou vers un volume interne du poussoir central fixe 202C qui est creux en arrière des passages radiaux 202İ et qui s'étend autour de l'axe X200 pour former une portion du conduit 204. On note 2027 la face avant du poussoir 202C. On note D202 le diamètre de la tête 202D du poussoir central fixe 202C. Une bague 240, solidaire axialement du corps 202, est montée libre en rotation autour de ce corps.

L'élément femelle de raccord 200 comprend également un clapet 206 qui est monté mobile axialement autour du poussoir central fixe 202C, radialement à l'intérieur de l'élément tubulaire 202B et qui est chargé élastiquement vers une position de fermeture, par un ressort 232 qui exerce un effort axial E2. Dans sa position de fermeture, le clapet 206 équipé d'un joint d'étanchéité est en contact étanche contre un siège 208 formé par le corps 202, au niveau d'une surface périphérique radiale externe 211 de la tête 202D.

On note 2067 la face avant annulaire du clapet 206. En configuration désaccouplée du raccord, les faces avant 2027 et 2067, qui sont planes et perpendiculaires à l'axe X200, sont affleurantes l'une avec l'autre, de sorte que la face avant 217 de l'élément femelle de raccord 200 constituée par les faces avant 2067 et 2027 est plane, radialement à l'intérieur de l'élément tubulaire 202B.

Le corps 202 est équipé d'un joint torique d'étanchéité en élastomère 252 installé dans une gorge périphérique interne ménagée sur une surface radiale interne 210 de l'élément tubulaire 202B. Par ailleurs, le clapet 206 est équipé d'un joint torique d'étanchéité en élastomère 214 installé dans une gorge périphérique interne 2064 ménagée au niveau d'une 'extrémité avant 2062 du clapet 206. Dans sa position de fermeture, le clapet 206 coopère également de manière étanche avec le joint 252.

On note ℓ2064 la largeur de la gorge 2064 prise selon l'axe longitudinal X200, D2062 le diamètre de la surface cylindrique interne de l'extrémité avant 2062 et L2062 la longueur axiale de l'extrémité avant 2062 prise entre la face avant 2067 et un épaulement 2063 délimitant l'extrémité avant 2062 à l'arrière. Le diamètre D2062 est égal au diamètre D110.

Une jupe 220, réalisée sous la forme d'une bague, est montée autour du poussoir central fixe 202C, radialement à l'intérieur du clapet 206. Cette jupe 220 comprend une portion tubulaire 222 avant, à section circulaire dont on note D222 le diamètre extérieur et S222 la surface radiale externe qui est cylindrique à section circulaire. Cette surface S222 est étagée. En effet, le diamètre D222 prend, le long de la surface S222, deux valeurs distinctes, à savoir une première valeur D222₁ sur la portion avant S222₁ de la surface S222 et une deuxième valeur D222₂, strictement inférieure à la valeur D222₁, sur la portion arrière S222₂ de la surface S222.

La jupe 220 comprend également une collerette arrière 226 en saillie radiale vers l'extérieur par rapport à la surface S222 et dans laquelle sont ménagés six logements radiaux 228 qui s'étendent radialement à l'axe X200, qui sont régulièrement répartis autour de l'axe longitudinal X200 et qui sont traversants, c'est-à-dire qu'ils débouchent à la fois à l'intérieur de la jupe 220 en direction de l'axe X200 et à l'extérieur de celle-ci, selon une direction radiale. La partie de la portion 222 de diamètre D222₂ est disposée, le long de l'axe X200, entre la partie de diamètre D222₁ et la collerette 226.

Le diamètre D222₁ est égal aux diamètres D6 et D202, ce qui permet à la jupe 200 de pénétrer à l'intérieur du corps 102 de l'élément mâle, à la suite de la tête 202D du poussoir central fixe 202C, en cours d'accouplement des éléments mâle et femelle de raccord 100 et 200.

On note L222 la longueur axiale de la surface S222. La longueur L222 est délimité entre un bord avant 220a de la jupe 220 et la collerette 226. La longueur L222 est supérieure ou égale à deux fois la longueur L2062. On note L1 la distance axiale entre les gorges 155 et 2064 lorsque l'extrémité 112 est en appui contre le clapet 206, en cours d'accouplement/désaccouplement des éléments mâle et femelle de raccord 100 et 200 ou en configuration accouplée du raccord 2.

On note L2 la longueur axiale de la partie avant de la portion 222, dont le diamètre extérieur vaut D221₁. Les longueurs L1 et L2 sont choisies de sorte que L2 est inférieure ou égale à L1. Ainsi en cours d'accouplement, le joint 214 engagé autour de la jupe 220 a quitté la portion avant S222₁ lorsque le joint 154 s'engage autour de la jupe 220 au niveau de la portion arrière S222₂ limitant les frottements dus aux joints en cours d'accouplement.

On note L3 la longueur axiale entre la face avant 1127 et le bord arrière de la gorge 155. La longueur L222 est supérieure ou égale à la somme de la longueur L2062 et de la longueur L3.

Une bille 230 est disposée dans chaque logement radial 228. Le diamètre de chaque bille 230 est choisi strictement supérieur à la hauteur radiale de chaque logement 128, c'est-à-dire à la dimension de ce logement mesurée radialement à l'axe X200. Chaque bille 230 disposée dans un logement 228 dépasse ainsi en permanence de ce logement, soit radialement vers l'extérieur, soit radialement vers l'intérieur, par rapport à la collerette 226. Chaque bille 130 constitue un organe d'attelage de la jupe 220 au corps 202 ou au clapet 206, ainsi qu'il ressort des explications qui suivent. En pratique, chaque logement 228 est un perçage radial à section circulaire ménagé dans la collerette 226 avec un diamètre légèrement supérieur au diamètre de la bille 230 qu'il reçoit. Chaque bille 230 est donc solidaire axialement de la jupe 220 et mobile radialement par rapport au corps 202 dans un logement 228.

Le poussoir central fixe 202C est pourvu d'une gorge périphérique radiale externe 2028 destinée à recevoir une partie de chacune des billes 230. On note S2 la surface radiale externe du poussoir central fixe situé à l'arrière de la gorge 1028. On note D2 le diamètre de cette surface S2 qui est cylindrique à section circulaire. Ce diamètre D2 est supérieur au diamètre de fond de gorge de la gorge 2028. Ainsi, la gorge 2028 forme un logement en creux, radialement en direction de l'axe X200, par rapport à la surface S2. La surface S2 est disposée, le long de l'axe X200, entre la gorge 2028 et le manchon 202H.

La partie du siège 208 définie sur la surface périphérique de la tête 202D est disposée à l'avant des débouchés des passages radiaux 202Î sur la surface radiale externe du poussoir central fixe 202C, alors que la deuxième surface de blocage S2 et la gorge 2028 sont disposés à l'arrière de ces débouchés.

Le clapet 206 est équipé d'une gorge périphérique radiale interne 2068 qui constitue un logement en creux, radialement à l'opposé de l'axe X200, par rapport à la surface radiale interne S1 du clapet 206 en arrière de cette gorge 2068. On note D1 le diamètre interne de la surface S1 cylindrique à section circulaire du clapet 206 qui est inférieur au diamètre en fond de gorge de la gorge 2068.

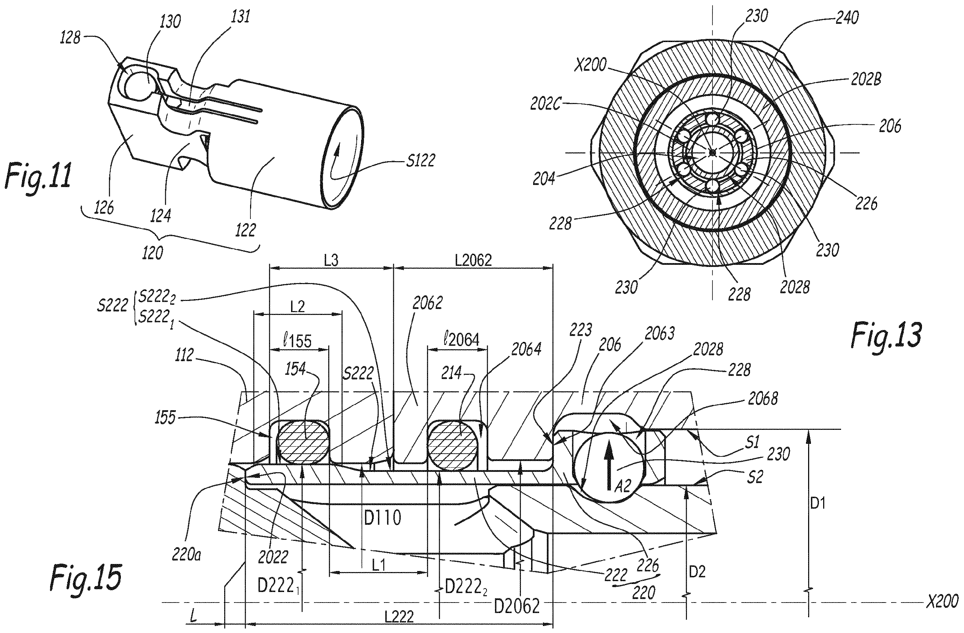

Le fonctionnement de ce raccord 2 est le suivant :
En configuration désaccouplée représentée aux figures 12 et 13, la jupe 220 entoure les passages radiaux 202Î du poussoir central fixe 202C. La jupe 220 est dégagée axialement par rapport au joint 214.

Dans cette configuration, le clapet 206 est en position de fermeture de l'élément femelle de raccord 200. En particulier, le joint 214 coopère de manière étanche avec la surface radiale externe de la tête 202D en étant comprimé radialement entre le clapet 206 et la tête 202D.

Dans cette configuration désaccouplée, les billes 230 sont en regard de la surface S1, de sorte qu'elles sont repoussées radialement vers l'intérieur dans la gorge annulaire 2028 qui forme un logement de réception de la partie interne de chacune de ces billes. La jupe 220 est ainsi solidarisée, en translation selon l'axe X200, avec le poussoir central fixe 202C, donc avec le corps 202.

On note L la distance axiale entre le bord avant 220a de la jupe 220 et un épaulement externe 2022 du poussoir central fixe qui délimite la tête 202D vers l'arrière. En configuration désaccouplée, le bord avant 220a de la jupe 220, c'est-à-dire le bord de la portion tubulaire 222 opposé à la collerette 224, est en butée axiale contre l'épaulement externe 2022. En d'autres termes, la distance L est nulle. Du fait des jeux de fonctionnement entre la gorge 2028 et les billes 230, le bord avant 220a peut s'étendre à une faible distance axiale L non nulle de la tête 202D. En variante, en ménageant la butée axiale de la jupe 220 vers l'avant contre le poussoir central fixe à distance de la tête 202D, comme dans le premier mode de réalisation, par exemple à l'arrière des orifices 202I, il est possible que la distance axiale L définie comme ci-dessus entre le bord avant 220a de la jupe et la tête 202D soit non nulle. On note Lₘₐₓ la valeur maximale de la distance L lorsque les billes 230 sont dans leur première position radiale.

Tant que les éléments 202 et 220 sont solidaires, la distance axiale L mesurée entre la jupe 220 et la tête 202D est en permanence inférieure ou égale à la moitié, de préférence au tiers, de la largeur ℓ2064. On peut en outre prévoir que, dans cette configuration, la distance axiale L est inférieure ou égale à la moitié, de préférence au tiers, de la largeur ℓ155. En d'autres termes, la valeur maximale Lₘₐₓ est inférieure ou égale à t1064/2, de préférence à t1064/3.

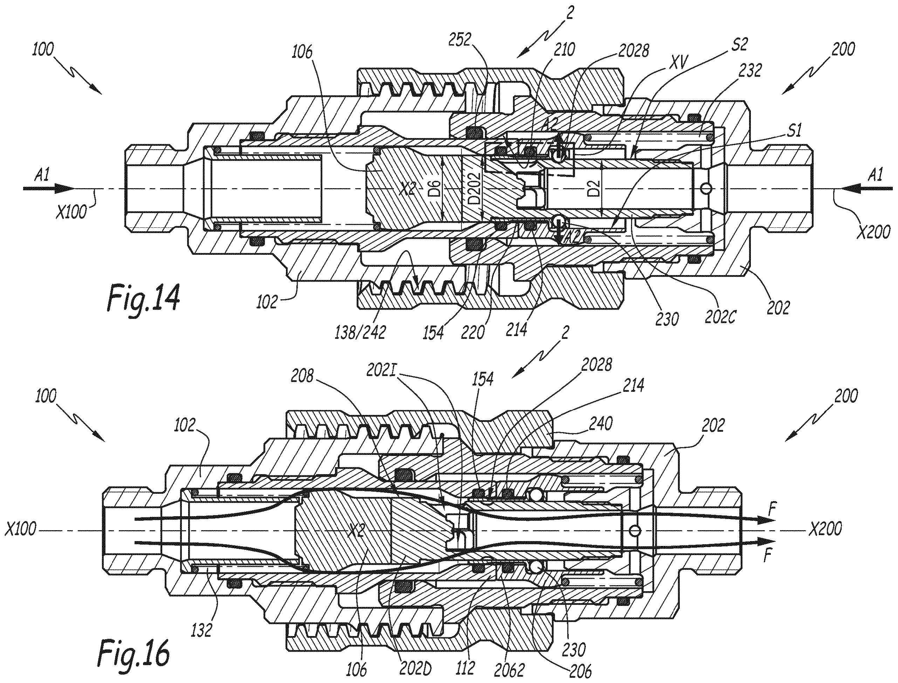

Au début de l'accouplement des éléments mâle et femelle 100 et 200, les éléments de raccord sont alignés sur l'axe X2, puis sont rapprochés l'un de l'autre dans le sens des flèches A1 à la figure 14. Ceci a pour effet d'amener la face avant 2027 du poussoir central fixe 202C au contact de la face avant 1067 du clapet 106, alors que la face avant 1127 du corps mâle est amenée au contact de la face avant 2067 du clapet 206.

Au cours de l'accouplement des éléments mâle et femelle 100 et 200, le clapet 106 est repoussé par le poussoir fixe 202C vers l'arrière de l'élément mâle de raccord 100, à l'encontre de l'effort E1, au point que la tête 202D pénètre dans le corps 102, en direction de l'arrière de ce corps 102, en entraînant avec elle la jupe 220 qui lui est solidarisée axialement par l'intermédiaire des billes 230 engagées dans la gorge 2028. Ceci est possible, notamment, grâce au fait que les diamètres D6, D202 et D222₁ sont égaux. L'étanchéité entre le corps 202 et le corps 102 est prise par l'intermédiaire du joint 252. Au fur et à mesure de la progression de la tête 202D vers l'arrière de l'élément mâle de raccord 100, le joint 214 vient entourer la jupe 220, puis le joint 154 vient, à son tour, entourer la jupe 220. Lorsque le joint 154 s'écarte axialement de la tête 202D, la circulation de fluide dans le raccord 2 est possible.

Ce mouvement d'emmanchement des éléments mâle et femelle de raccord 100 et 200 l'un dans l'autre, dans le sens des flèches A1, a lieu du fait du vissage de la bague 240 sur le corps 102, et de la coopération du filetage 138 avec le taraudage 242.

Du fait que la jupe 220 passe radialement à l'intérieur des joints 154 et 214, elle protège ceux-ci contre la pression du fluide destiné à circuler dans le raccord 2, et contre le débit du fluide lorsque les éléments mâle et femelle 100 et 200 sont effectivement accouplés.

Comme la distance L est inférieure ou égale à la moitié, de préférence au tiers, de la largeur ℓ2064 dans cette configuration, le joint 214 ne risque pas d'être chassé de la gorge 2064 lors de son passage de l'extérieur de la tête 202D à l'extérieur de la jupe 220.

Au cours du déplacement du clapet 206 vers l'arrière de l'élément femelle 200, la jupe 220 reste fixe, le long de l'axe X200, par rapport au corps 202 puisqu'elle est attelée, par l'intermédiaire des six billes 230, à ce corps 202, dans la mesure où ces billes sont bloquées dans la gorge 2028 du fait de la géométrie de la surface S1.

En poursuivant le mouvement d'accouplement dans le sens des flèches A1 et en même temps que l'extrémité 112 du corps 102 pénètre dans le corps 202, le joint 154 quitte la tête 202D pour s'engager autour de la jupe 220. Comme la distance L est inférieure ou égale à la moitié, de préférence au tiers, de la largeur ℓ155, le joint 154 ne risque pas non plus d'être chassé de la gorge 155 lors de son passage autour de la jupe 220.

Lorsque les deux joints 154 et 214 sont totalement recouverts par la jupe 220, le clapet 206 est repoussé par l'extrémité 112 du corps 102, à l'encontre de l'effort E2 jusque dans la position représentée aux figures 14 et 15 où l'épaulement interne 2063 du clapet 206 qui forme une surface de butée arrière vient au contact d'un épaulement externe 223 de la jupe 220 qui est formé par la face avant de la collerette 226. En d'autres termes, le clapet 206 est en butée axiale arrière contre la jupe 220. Dans cette configuration, la gorge annulaire 2068 est alignée axialement avec les logements 228, de sorte que les billes 230 peuvent avoir un mouvement centrifuge, pour s'engager dans la gorge 2068. Le mouvement centrifuge des billes 230 est représenté par les flèches A2 aux figures 14 et 15.

Au terme du mouvement centrifuge des billes 230, leur partie radiale externe qui est engagée dans la gorge 2068. Le mouvement d'accouplement des éléments 100 et 200 se poursuit du fait du vissage de la bague 240 sur le corps 102, ce qui a pour effet de pousser encore plus le poussoir central fixe 202C dans le corps 102 et l'extrémité 112 du corps 102 dans le corps 202. Ceci repousse encore les clapets 106 et 206 respectivement vers l'arrière des éléments mâle et femelle de raccord 100 et 200. Au cours de ce mouvement d'emmanchement supplémentaire qui correspond au passage la configuration de la figure 14 à la configuration de la figure 16, la jupe 220 se déplace en translation conjointement avec le clapet 206 et l'extrémité 112 du corps 102 en appui sur celui-ci, ce qui a pour conséquence que les joints 154 et 214 continuent à être recouverts radialement sur l'intérieur par la jupe 220. Au cours de ce déplacement supplémentaire du clapet 206 vers l'arrière de l'élément femelle de raccord 200, ce clapet et la jupe 220 sont attelés par les six billes 230. La partie radiale externe des billes 230 est engagée dans la gorge 2068 et les billes 230, qui sont alignées avec la surface S2, glissent ou roulent sur la surface S2. Ainsi, dans cette configuration, les billes 230 solidarisent axialement la jupe 220 et le clapet 206.

Ce déplacement supplémentaire permet d'atteindre la configuration accouplée de la figure 16 où le corps 102 vient en butée axiale contre le corps 202. Le clapet 206 est dans sa position d'ouverture, le fluide peut circuler entre les deux éléments de raccord. Les billes 230 solidarisent axialement la jupe 220 et le clapet 206 dans une configuration où cette jupe protège efficacement les joints 154 et 214 contre la pression et le débit de la veine fluide principale représentée par les flèches F sur cette figure 16, la jupe 220 étant intercalée radialement entre ces joints et cette veine fluide et recouvrant complètement, radialement par l'extérieur, les gorges 155 et 2064, et donc les joints 154 et 214. La jupe 230 est en retrait axialement vers l'arrière par rapport aux orifices traversants 202İ, de sorte qu'elle ne gêne pas l'écoulement de la veine fluide représentée par les flèches F, alors qu'elle protège efficacement les joints 154 et 214 vis-à-vis de cet écoulement.

On remarque à la figure 15 que la structure étagée de la surface S222, avec le diamètre D222₁ supérieur au diamètre D222₂ a pour conséquence qu'une épaisseur radiale minimale (D2062-D222₂)/2 entre la portion arrière S222₂ et le clapet 206 est supérieure à une épaisseur radiale minimale (D110-D222₁)/2 entre la portion avant S222₁ et la partie avant 112 du corps 102 lorsque les billes 230 sont engagées dans la gorge 2068 en cours d'accouplement. En d'autres termes, le joint 214 est moins comprimé dans la gorge 2064 que le joint 154 dans la gorge 155 lorsque la jupe 220 recouvre radialement les deux joints 214 et 154. La valeur du diamètre D222₁ est imposé par la valeur des diamètres D6 et D202. Le fait que le diamètre D222₂ présente une valeur inférieure permet que le joint 214 soit moins sollicité en configuration accouplée et que ses frottements sur la surface S222 soient moins importants en cours d'accouplement que si la jupe 220 présentait un diamètre, constant sur sa longueur L222, égal au diamètre D222₁. Ceci augmente la durée de vie du joint 214 et facilite la manœuvre du raccord à la fois à l'accouplement et au désaccouplement. En particulier, le diamètre D222₂ peut être choisi égal ou légèrement inférieur au diamètre intérieur du joint 214 en configuration montée non comprimée dans la gorge 2064.

Le désaccouplement a lieu selon une manœuvre inverse de celle mentionnée ci-dessus. La bague 240 est dévissée par rapport au corps 102, ce qui induit un mouvement de retrait de l'élément mâle de raccord 100 par rapport à l'élément femelle de raccord 200, dans le sens inverse des flèches A1. Les efforts E1 et E2 contribuent à écarter les éléments de raccord 100 et 200 l'un de l'autre en repoussant les clapets 106 et 206 vers leur position de fermeture respective. Au début de ce mouvement de retrait, la jupe 220, qui est solidaire du clapet 206 du fait de l'action des billes d'attelage 230, suit le mouvement de ce clapet en appui sur l'extrémité avant 112 du corps 102, le clapet étant repoussé par l'effort élastique E2 du ressort 232. Le ressort 232 qui exerce l'effort élastique E2 agit également sur la jupe 220 par l'intermédiaire des billes 230.

Du fait du mouvement conjoint de la jupe 220 et du clapet 206, la jupe 220 se déplace vers l'avant de l'élément femelle de raccord 200 et les billes 230 parviennent en regard de la gorge 2028, alors que la jupe 220 parvient en butée contre l'épaulement 2063, dans une configuration comparable à celle des figures 14 et 15. La poursuite du retrait de l'élément mâle de raccord 100 par rapport à l'élément femelle de raccord 200 et l'effort E2 amène la surface S1 du clapet 206 en regard des billes 230, ce qui a pour effet d'engager à nouveau les billes 230 dans la gorge 2028, selon un mouvement centripète inverse du mouvement représenté par les flèches A2. Ceci revient à solidariser axialement la jupe 220 et le corps 202, au niveau du poussoir central fixe 202C. Dans cette configuration, les joints 154 et 214 sont encore recouverts par la jupe 220. Ils sont donc protégés contre l'action du fluide présent dans les conduits 104 et 204.

La poursuite du mouvement de désaccouplement a lieu grâce à un mouvement supplémentaire du clapet 206 en appui sur l'extrémité 112 du corps 102, sous l'action de l'effort E2, alors que la jupe 220 reste immobilisée axialement sur le poussoir central 202C, ce qui est possible puisque les éléments 206 et 220 ne sont alors plus solidaires axialement.

Le joint 154 revient au contact de la tête 202D, ce qui a pour effet de couper la circulation de fluide dans le raccord 2. Le clapet 206 finit alors par venir recouvrir la tête 202D du poussoir central fixe 202C, au point que le joint 214 vient en contact contre la partie du siège 208 formée par la surface périphérique externe 211 de cette tête et que le joint 252 vient en contact étanche contre la surface radiale externe du clapet 206, ce qui assure l'étanchéité de la fermeture de l'élément femelle de raccord 200. Ce mouvement de fermeture de l'élément de raccord 200 a lieu sans risque d'expulsion du joint 214 de la gorge 2064 du fait de la relation suivante : L ≤ ℓ2064.

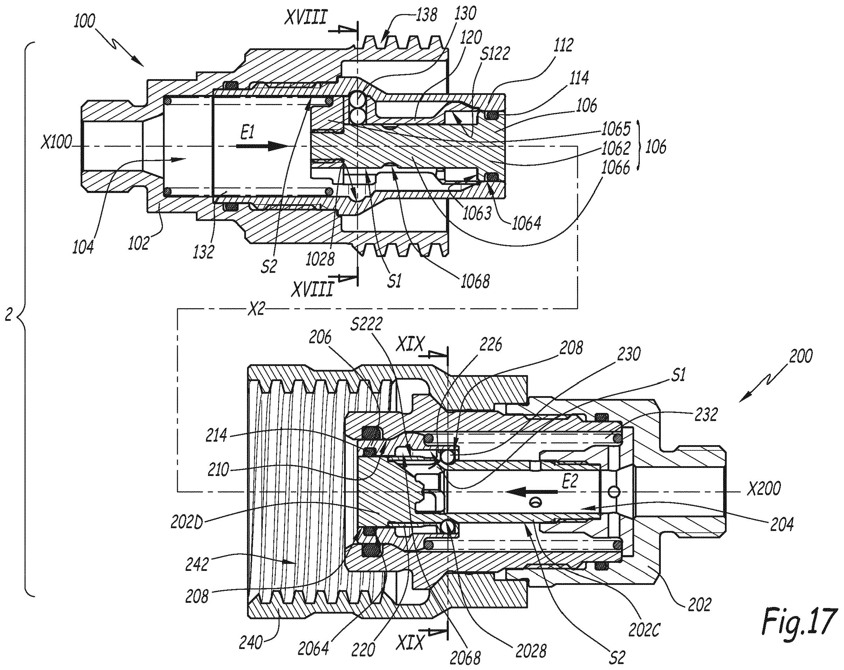

Le quatrième mode de réalisation représenté aux figures 17 à 24 est une variante des premier et troisième modes de réalisation dans laquelle à la fois l'élément mâle de raccord 100 et l'élément femelle de raccord 200 sont conformes à l'invention et comprennent chacun une jupe 120, respectivement 220, réalisées chacune sous la forme d'une bague, destinée à venir recouvrir radialement un joint 114, respectivement 214, de cet élément en cours d'accouplement/désaccouplement et en configuration accouplée du raccord.

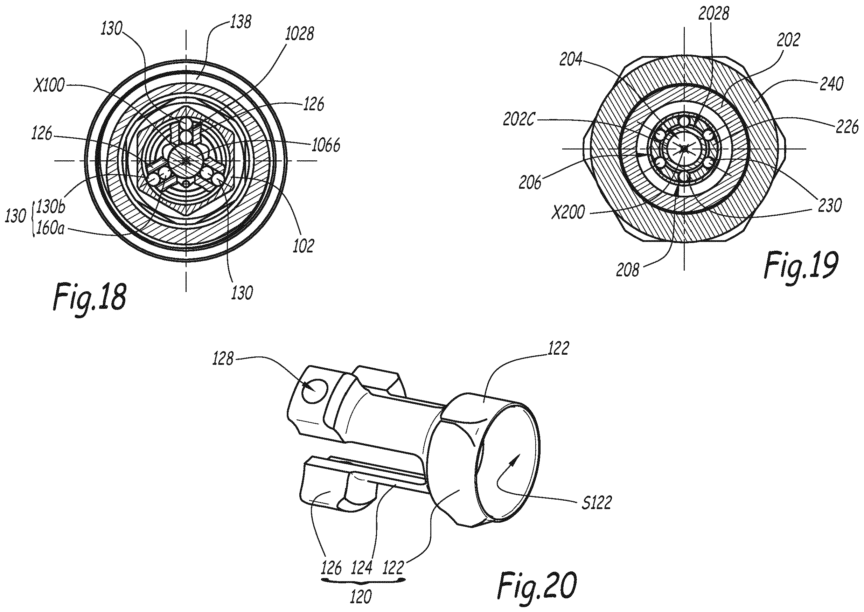

Comme dans le premier mode de réalisation, l'élément mâle de raccord 100 comprend un corps 102 centré sur un axe X100 et qui définit un conduit 104 de circulation de fluide obturé, en configuration fermée, par un clapet 106 équipé d'un joint torique d'étanchéité en élastomère 114 disposé dans une gorge périphérique externe 1064 ménagée sur une partie avant 1062 du clapet 106 et qui vient en contact étanche contre un siège 108 formé par le corps 102, au niveau d'une surface périphérique radiale interne 110 de la partie avant du corps 102, en configuration désaccouplée. Dans cette position de fermeture, le joint 114 est comprimé radialement entre le clapet 106 et l'extrémité avant 112 du corps 102. La jupe 120 est visible en perspective à la figure 20 et comprend une portion tubulaire 122 délimitant une surface S122 radiale cylindrique interne à section circulaire et reliée par trois pattes de liaison 124 à trois talons, ou pattes arrière, 126 dans chacun desquels est ménagé un logement radial traversant 128. Le diamètre de la surface S122 est égal au diamètre interne de la surface radiale interne 110. Les pattes arrières 126 sont maintenues en butée avant contre le corps 102 en configuration désaccouplée par un ressort 132 exerçant un effort axial E1 dirigé vers l'avant sur le clapet 106. Une paire de billes 130 est disposée dans chaque logement traversant 128, avec une bille interne 130a et une bille externe 130b qui sont alignées et qui fonctionnent comme dans le premier mode de réalisation. Ces deux billes 130a et 130b de la paire de billes 130 sont mobiles radialement par rapport au corps 102 dans le même logement 128 et sont solidaires axialement de la jupe 130.

Ces billes 130a et 130b appartiennent à des paires de billes 130 et sont alternativement engagées dans une gorge périphérique radiale externe 1068 de la tige 1066 du clapet 106 ou dans une gorge périphérique radiale interne 1028 du corps 102, alors que des surfaces de blocage S1 et S2 cylindriques à section circulaire sont prévues dans l'élément mâle 100, comme dans le premier mode de réalisation.

Le corps 202 de l'élément femelle 200 est multipartite et comprend deux éléments tubulaires 202A et 202B, ainsi qu'un poussoir central fixe 202C. Dans l'élément femelle 200, la jupe 220 est montée autour du poussoir central fixe 202C qui appartient au corps 202 de cet élément, ce corps définissant un conduit 204 de circulation de fluide. Un clapet 206 est monté coulissant le long de l'axe X200 autour de ce poussoir central fixe 202C à l'intérieur de l'élément tubulaire 202B et est équipé d'un joint torique d'étanchéité en élastomère 214 disposé dans une gorge périphérique interne 2064 du clapet 206. Le clapet 206 est repoussé vers l'avant en direction de sa position de fermeture par l'effort axial E2 d'un ressort 232. En configuration désaccouplée, dans sa position de fermeture, le joint 214 du clapet 206 est en contact étanche contre un siège 208 formé par le corps 202, au niveau d'une surface périphérique radiale externe 211 de la tête 202D. Le joint 214 est comprimé radialement entre la tête 202D et le clapet 206. Dans sa position de fermeture, un joint 252 porté une surface périphérique radiale interne 210 de l'élément tubulaire 202B est également comprimé radialement entre le clapet 206 et l'extrémité avant de l'élément tubulaire 202B, créant un contact étanche entre le joint 252 et le clapet 206.

Une portion tubulaire 222 de la jupe 220 délimite une surface S222 radiale cylindrique externe à section circulaire dont le diamètre est égal au diamètre de la surface périphérique radiale externe 211 de la tête 202D.

Six billes 230 sont respectivement reçues dans six logements traversants 228 ménagés dans une collerette arrière 226 de la jupe 220 et débouchants vers l'axe X200. Le diamètre de ces billes 230 est tel qu'elles dépassent en permanence des logements radiaux 228, soit radialement vers l'intérieur soit radialement vers l'extérieur. Chaque bille 230 est solidaire axialement de la jupe 220 et mobile radialement par rapport au corps 202 dans le logement 228.

Ces billes 230 sont alternativement engagées dans une gorge périphérique radiale interne 2068 du clapet 206 ou dans une gorge périphérique radiale externe 2028 du poussoir fixe 202C du corps 202, alors que deux surfaces de blocage S1 et S2 sont prévues dans l'élément femelle 200, comme dans le troisième mode de réalisation.

Le fonctionnement de ce raccord se déduit des explications fournies précédemment au sujet des premier et troisième modes de réalisation de l'invention.

En configuration désaccouplée de la figure 17, les billes 130 sont engagées dans le logement 1028 et les billes 230 sont engagées dans le logement 2028. La jupe 120 est dégagée axialement par rapport au joint 114. La jupe 220 est apte à venir en butée avant contre la tête 202D du poussoir central fixe 202C. La jupe 220 est dégagée axialement par rapport au joint 214.

Dans cette configuration des billes 230, et malgré les jeux entre les billes 230 et les logements 228, la jupe 220 n'est pas distante de la tête 202D de plus de la moitié, de préférence du tiers, de la largeur axiale de la gorge périphérique interne 2064. Dans cette configuration des billes 130, et malgré les jeux entre les billes 130 et les logements 128, la jupe 120 ne peut être distante de la partie avant 112 de plus de la moitié, de préférence du tiers, de la largeur axiale de la gorge périphérique externe 1064.

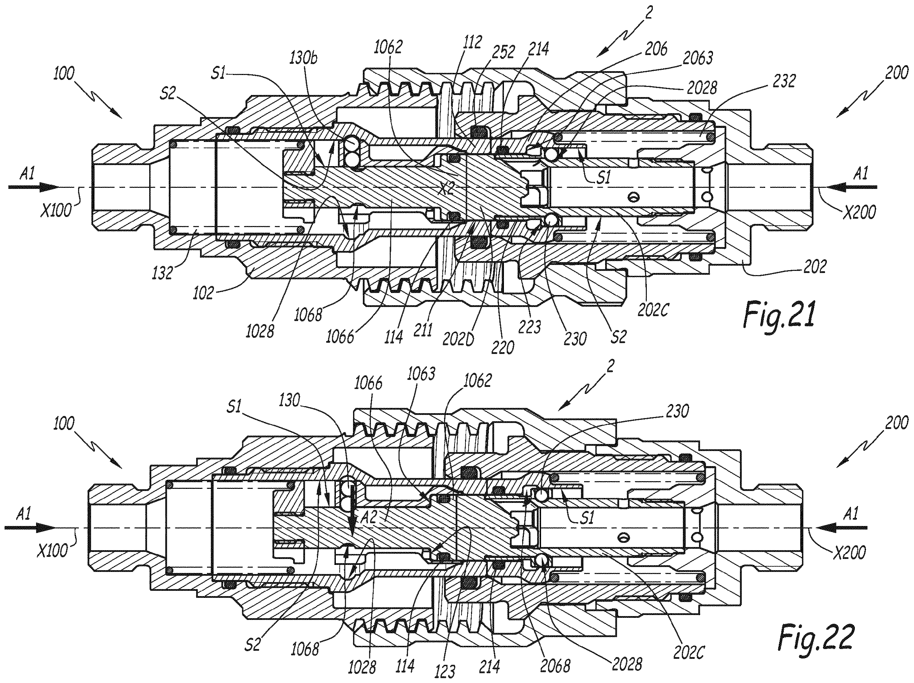

Au début de l'accouplement, , les axes longitudinaux respectifs X100 et X200 des éléments mâle et femelle de raccord 100 et 200 sont alignés sur un axe central du raccord X2 et ces éléments sont rapprochés dans le sens des flèches A1. Le rapprochement des éléments de raccord se poursuit grâce au vissage du taraudage interne 242 d'une bague 240 de l'élément femelle de raccord 200 sur un filetage 138 du corps 102 de l'élément mâle de raccord 100. Dans la configuration de la figure 21, la tête 202D du poussoir central fixe 202C a commencé à pénétrer dans l'extrémité avant 112 du corps 102 en repoussant la partie avant 1062 du clapet 106 à l'intérieur de la jupe 120, de telle sorte que le joint 114 est recouvert, radialement par l'extérieur, par la surface S122 de la portion tubulaire 122 de la jupe 120. Le joint 114 est comprimé entre le clapet 106 et la jupe 120. Au cours de ce mouvement de recul du clapet 106, la bague 120 ne recule pas à l'intérieur du corps 102 puisqu'elle est solidarisée axialement à celui-ci par les billes extérieures 130b des paires de billes 130 qui sont engagées dans la gorge annulaire 1028, en étant contraintes radialement vers l'extérieur par la surface S1 définie par le clapet 106. Parallèlement, la portion tubulaire 222 de la jupe 220 vient recouvrir, radialement par l'intérieur, le joint 214 du clapet 206. Le joint 214 est alors comprimé entre la jupe 220 et le clapet 206. Plus précisément, le clapet 206 recule sous l'action de l'extrémité 112 du corps 102 qui le repousse à l'encontre de l'effort élastique E2 exercé par le ressort 232, alors que la jupe 220 conserve sa position le long de l'axe X200 car elle est solidarisée axialement au poussoir central fixe 202C par les billes 230 qui sont engagées dans la gorge annulaire 2028, en étant contraintes radialement vers l'intérieur par la surface S1 définie par le clapet 206.

La poursuite du mouvement d'emmanchement dans le sens des flèches A1 a pour effet d'amener les paires de billes 130 de l'élément mâle de raccord 100 en regard de la gorge 1068 de la tige 1066 lorsque la partie avant 1062 du clapet 106 parvient en butée sur l'arrière, par une surface de butée arrière 1063, contre un épaulement 123 de la jupe 120, comme représenté à la figure 22. Les paires de billes 130 sont alors mobiles entre leur première position radiale et leur deuxième position radiale. En d'autres termes, elles peuvent alors avoir un mouvement radial centripète dirigé vers l'axe X100, comme représenté par la flèche A2 sur la figure 22, ce qui permet de dégager les billes 130b de la gorge 1028 et d'engager les billes 130a dans la gorge 1068.

Dans cette position, les billes 230 ne sont pas encore parvenues au niveau de la gorge 2068, de sorte qu'elles demeurent engagées, par la surface S1 de l'élément femelle de raccord 200, dans la gorge 2028. En d'autres termes, la jupe 120 cesse d'être solidarisée axialement avec le corps 102 de l'élément mâle de raccord 100, alors que la jupe 220 est encore solidarisée axialement avec le corps 202 de l'élément femelle de raccord 200.

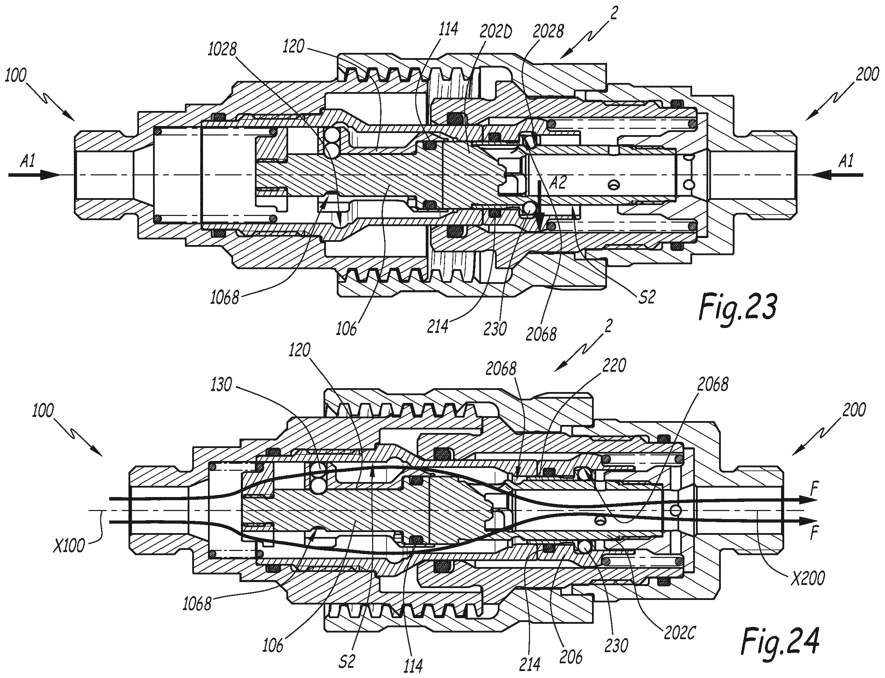

A partir de cette position et en poursuivant le mouvement d'emmanchement, les paires de billes 130 s'engagent dans la rainure 1068. En poursuivant le mouvement d'emmanchement dans le sens des flèches A1, on arrive dans la configuration de la figure 23 où la jupe 120 s'est déplacée avec le clapet 106, à partir de la configuration de la figure 22. L'épaulement arrière 2063 du clapet 206 parvient au contact de l'épaulement externe 223 de la jupe 22. Les billes 230 parviennent en regard de la gorge annulaire 2068, ce qui leur permet de se dégager de la gorge 2028 avec un mouvement centrifuge représenté par la flèche A2 sur la figure 23. La configuration de la figure 23 correspond donc à la configuration de la figure 14 pour le troisième mode de réalisation dans laquelle les billes 230 basculent de leur première position, où elles solidarisent axialement les éléments 220 et 202, à la deuxième position, où elles solidarisent axialement les éléments 220 et 206.

La poursuite de l'emmanchement dans le sens des flèches A1 permet d'atteindre la configuration accouplée représentée à la figure 24 où le corps 102 vient en butée axiale contre le corps 202 et où l'écoulement de fluide peut avoir lieu comme représenté par les veines fluides F. Le passage de la configuration de la figure 23 à celle de la configuration de la figure 24 a lieu au moyen d'une translation commune de la jupe 120 et du clapet 106 à l'intérieur de l'élément mâle de raccord et de la jupe 220 et du clapet 206 à l'intérieur de l'élément femelle de raccord. Les paires de billes 130 et les billes 230 solidarisent axialement les deux équipages ainsi formés en étant engagées dans les gorges 1068, respectivement 2068, et en étant contraintes par les surfaces S2.

Le désaccouplement a lieu en procédant à l'inverse, comme expliqué pour les modes de réalisation précédents.

En variante, dans ce quatrième mode de réalisation, les éléments mâle et femelle 100 et 200 peuvent être prévus pour que, en cours d'emmanchement, les billes 230 passent de leur première position, dans laquelle elles solidarisent axialement la jupe 220 au corps 202, à leur deuxième position, dans laquelle elles solidarisent axialement les éléments 206 et 220, en même temps ou avant que les paires de billes 130 puissent passer de leur première position, dans laquelle elles solidarisent axialement les éléments 102 et 120, à leur deuxième position dans laquelle elles solidarisent axialement les éléments 106 et 120. Le fait de dissocier le moment où les paires de billes 130 évoluent entre leur première et leur deuxième position et le moment où les billes 230 évoluent entre leur première et leur deuxième position en cours d'accouplement, et en cours de désaccouplement, permet de limiter les efforts et de faciliter les mouvements des billes 130, 230.

Dans ce mode de réalisation, la jupe 120 de l'élément mâle ne recouvre radialement par l'extérieur qu'un seul joint, à savoir le joint 114 de l'élément mâle de raccord 100, en cours d'accouplement et en configuration accouplée, à l'exclusion d'un joint appartenant à l'élément femelle. De même, la jupe 220 de ce mode de réalisation ne recouvre radialement par l'intérieur qu'un seul joint à savoir le joint 214 de l'élément femelle de raccord 200, en cours d'accouplement et en configuration accouplée, à l'exclusion d'un joint de l'élément mâle. Ceci constitue une différence par rapport aux premier et troisième modes de réalisation dans lesquels les jupes 120 et 220 recouvrent chacune deux joints appartenant respectivement aux éléments mâle et femelle, au moins en configuration accouplée.

Dans ce mode de réalisation, dans la configuration accouplée représentée à la figure 24, la partie avant 112 du corps 102 entoure radialement la jupe 220 de l'élément femelle de raccord 200 et la tête 202D est partiellement reçue dans la jupe 120 de l'élément mâle de raccord 100. Le fait que le corps 102 entoure radialement la jupe 220 facilite le guidage des éléments mâle et femelle de raccord 100 et 200.

Dans ce mode de réalisation également, les deux joints 114 et 214 sont efficacement protégés contre l'action du fluide sous pression destiné à transiter à travers le raccord 2 et les jupes 120 et 220 ne risquent pas d'être déplacées accidentellement vers une position où elles exposeraient ces joints à l'action du fluide, car elles sont solidarisées axialement respectivement avec les clapets 106 et 206 dans une position où elles recouvrent radialement complètement ces joints 114 et 214.

Ce quatrième mode de réalisation permet d'utiliser le raccord 2 avec ses éléments mâle et femelle 100 et 200 tous deux raccordés à des canalisations sous pression ou indifféremment avec l'un ou l'autre de ces éléments raccordés à une canalisation de fluide sous pression, alors que, dans les modes de réalisation précédents, on utilise plutôt le raccord avec l'élément équipé de la jupe 120 ou 220 connecté à une canalisation de fluide sous pression alors que l'autre élément de raccord complémentaire n'est pas connecté à une canalisation de fluide sous pression.

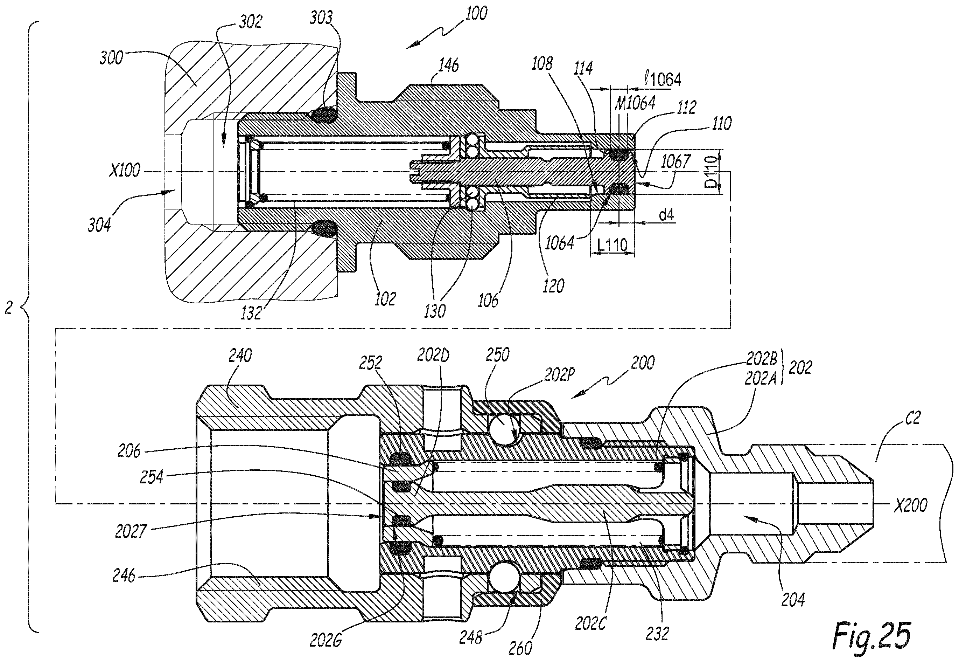

En ce qui concerne le cinquième mode de réalisation représenté aux figures 25 à 28, on décrit principalement ce qui distingue ce mode de réalisation de celui des figures 1 à 8.

Dans ce mode de réalisation, le corps 102 de l'élément mâle de raccord 100 est vissé dans un orifice taraudé 302 d'une plaque 300, avec interposition d'un joint d'étanchéité 303. L'orifice taraudé 302 est relié à un conduit 304 de circulation de fluide sous pression. Les parties 302 et 304 jouent le même rôle que la canalisation C1 dans le premier mode de réalisation.

Un clapet 106 est disposé dans le corps 102 en étant soumis à l'action d'un ressort 132 qui tend à ramener le clapet 106 vers une position dans laquelle un joint d'étanchéité 114 porté par ce clapet 106 est en contact avec un siège 108 formé par une surface radiale interne 110 de l'extrémité avant 112 du corps 102.

On note L110 la longueur axiale de la surface 110, c'est-à-dire la longueur de cette surface mesurée parallèlement à l'axe X100 défini comme dans le premier mode de réalisation. On note D110 le diamètre interne de la surface 110 qui est à section circulaire centrée sur l'axe X100.

Le joint d'étanchéité 114 est disposé dans une gorge périphérique externe 1064 de la partie avant 1062 du clapet 106. On note ℓ1064 la largeur axiale de la gorge 1064 et on note M1064 son milieu axial, défini comme un plan perpendiculaire à l'axe X100 et médian entre les bords avant et arrière de la gorge 1064.

On note d4 la distance axiale entre le milieu axial M1064 et la face avant 1067 du clapet 106.

La longueur axiale L110 est supérieure ou égale au double de la distance axiale d4. De façon avantageuse, la longueur axiale L110 est strictement supérieure au double de la distance axiale d4, de préférence supérieure ou égale à 2,5 fois cette distance d4.

Une jupe 120 est montée mobile autour du clapet 106 et des billes 130 permettent d'atteler cette jupe 120 sélectivement au corps 102 et au clapet 106.

L'élément femelle 200 du raccord 2 de ce mode de réalisation comprend un corps 202, formé de deux éléments tubulaires 202A et 202B vissés l'un sur l'autre, raccordé à une canalisation C2 et qui renferme un clapet 206 monté autour d'un poussoir central 202C fixe par rapport au corps 202. Un ressort 232 agit sur le clapet 206 pour le pousser vers l'avant du corps 202, radialement entre la tête 202D du poussoir 202C et une portion avant de l'élément tubulaire 202B du corps 202. Cette portion avant et la tête 202D sont respectivement équipées de deux joints d'étanchéité 252 et 254 contre lesquels vient en appui le clapet 206 en position de fermeture de l'élément femelle 200.

Dans ce mode de réalisation, la bague 240, qui est montée rotative autour du corps 202, est pourvue d'un taraudage 246 destiné à coopérer avec un filetage correspondant 146, prévu sur l'extérieur du corps 102. Ainsi, le corps 102 peut être vissé à l'intérieur de la bague 240. Par ailleurs cette bague 240 est mobile en rotation autour du corps 202, bloquée axialement par rapport au corps 102, le long de l'axe X200 défini comme dans le premier mode de réalisation et guidée en rotation autour de ce corps au moyen de billes 250 qui sont engagées dans une gorge périphérique externe 202P du corps 202, ainsi que dans des perçages radiaux 248 de la bague 240. Une bague 260 est montée autour des éléments 202 et 240 et retient les bagues 250 en position dans les orifices 248.

Le joint d'étanchéité 254 est disposé dans une gorge périphérique externe 202G de la tête 202D. On note M202G le milieu axial de la gorge 202G, défini comme un plan perpendiculaire à l'axe X200 et médian entre les bords avant et arrière de la gorge 202G.

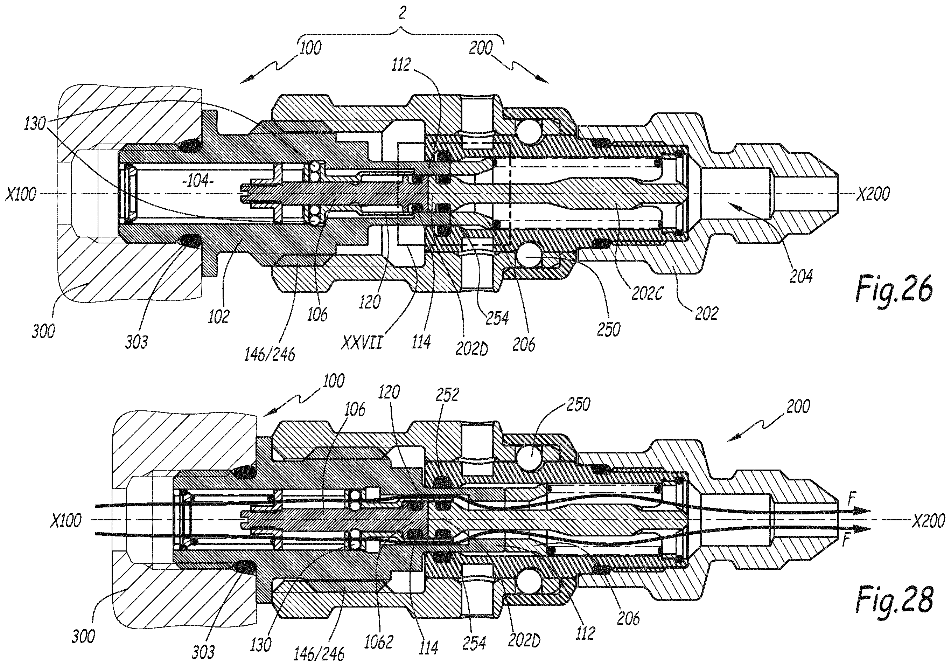

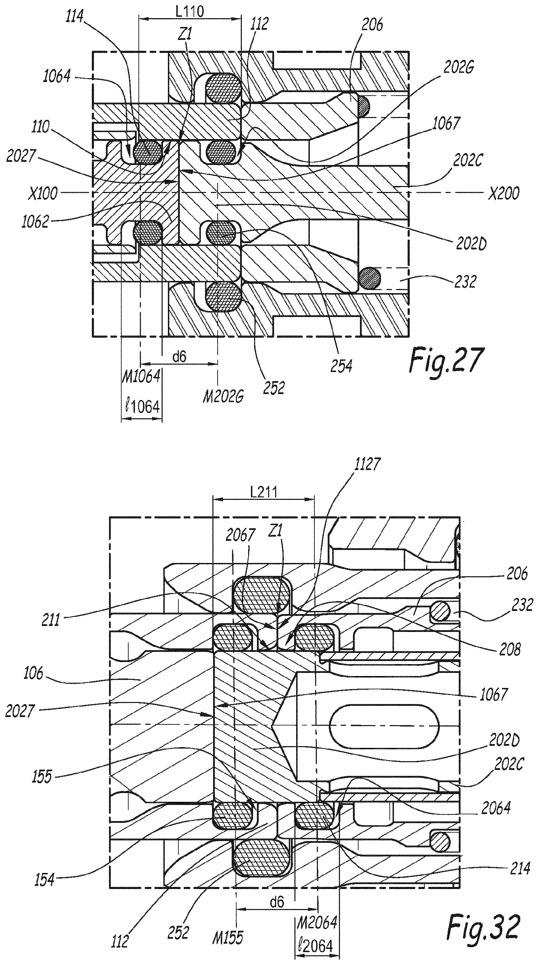

En cours d'accouplement, les corps 102 et 202 sont alignés le long de l'axe X200 et rapprochés, puis, comme représenté aux figures 26 et 27, la face avant 1067 du clapet 106 vient appui contre la face avant 2027 du poussoir 202C.

On note d6 la distance axiale entre les milieux axiaux M1064 et M202G dans la configuration des figures 26 et 27, c'est-à-dire en cours d'accouplement et lorsque les faces avant 1067 et 2027 sont en contact l'une avec l'autre. Cette distance d6 est la même en cours de désaccouplement des éléments 100 et 200, lorsque les faces avant 1067 et 2027 sont en contact l'une avec l'autre. La distance d6 est sensiblement égale au double de la distance d4, préférentiellement la distance d6 est 2 à 2,5 fois supérieure à la distance d4.

La longueur L110 est supérieure ou égale à la distance axiale d6. De façon avantageuse, la longueur L110 est strictement supérieure à la distance axiale d6, de préférence supérieure ou égale à 1,2 fois cette distance axiale d6.

En d'autres termes, la longueur L110 est allongée par rapport à la même longueur considérée pour le premier mode de réalisation, ce qui permet que, en cours d'accouplement, le joint 114 est en contact étanche avec la surface 110 tant que le joint d'étanchéité 254 n'est pas en contact étanche avec la surface 110 du corps 102. Autrement dit, en cours d'accouplement, une zone Z1 définie axialement entre les joints 114 et 254, en particulier au voisinage des faces avant 1067 et 2027, ne reçoit pas de fluide tant que le joint 254 n'est pas en contact étanche avec le corps 102 et, plus particulièrement, en appui contre la surface 110, c'est-à-dire tant que le joint 254 n'est pas protégé de toute éjection hors de la gorge 202G par sa coopération avec le corps 102. On évite ainsi les risques d'écoulement de fluide sous pression dans la zone Z1, ce qui pourrait repousser le clapet 206 vers l'arrière du corps 202, à l'encontre de l'action du ressort 232, ainsi que les risques d'éjection du joint 254 hors de la gorge 202G. La phase transitoire d'accouplement dans laquelle le joint 254 est parvenu en contact étanche avec la surface 110, alors que le joint 114 est encore en contact étanche avec le siège 108, est illustrée en figures 26 et 27.

En d'autres termes, la longueur L110 est suffisante pour que, en cours d'accouplement, le joint d'étanchéité 114 reste en appui étanche sur la surface 110 tant que le joint d'étanchéité 254 n'est pas en appui étanche contre cette surface, ce qui empêche efficacement tout passage de fluide sous pression destiné à circuler dans le raccord 2 au niveau de la zone Z1 et du joint 254.

En configuration accouplée du raccord 2 représenté à la figure 28, la jupe 120 recouvre les joints 114 et 254, comme dans la configuration de la figure 8 pour le premier mode de réalisation, ce qui protège ces joints vis-à-vis de l'écoulement de fluide sous pression au sein du raccord 2, cet écoulement étant représenté par les flèches F à la figure 28.

Lors du désaccouplement des éléments mâle et femelle 100 et 200, la surface 110 vient progressivement recouvrir le joint 254, puis le joint 114. Compte tenu des rapports entre, d'une part, la longueur L110 et, d'autre part, les distances d4 et/ou d6, la surface 110 recouvre le joint 114 avant que le joint 254 ne s'engage à l'intérieur du clapet 206. En d'autres termes, le joint 114 prend étanchéité contre la surface 110 formant le siège 108 avant que le joint 254 ne quitte le contact étanche avec la surface 110 et n'entre en contact avec le clapet 206. Ceci protège également la zone Z1 contre un écoulement de fluide sous pression qui pourrait repousser le clapet 206 vers l'arrière du corps 202, à l'encontre de l'action du ressort 232.

Sur les autres aspects non détaillés ci-dessus, ce mode de réalisation fonctionne comme celui des figures 1 à 8. En particulier, en cours d'accouplement et en configuration accouplée, la jupe 120 recouvre radialement le joint d'étanchéité 114 du clapet 106, ainsi que le joint d'étanchéité 254 de l'élément de raccord 200.

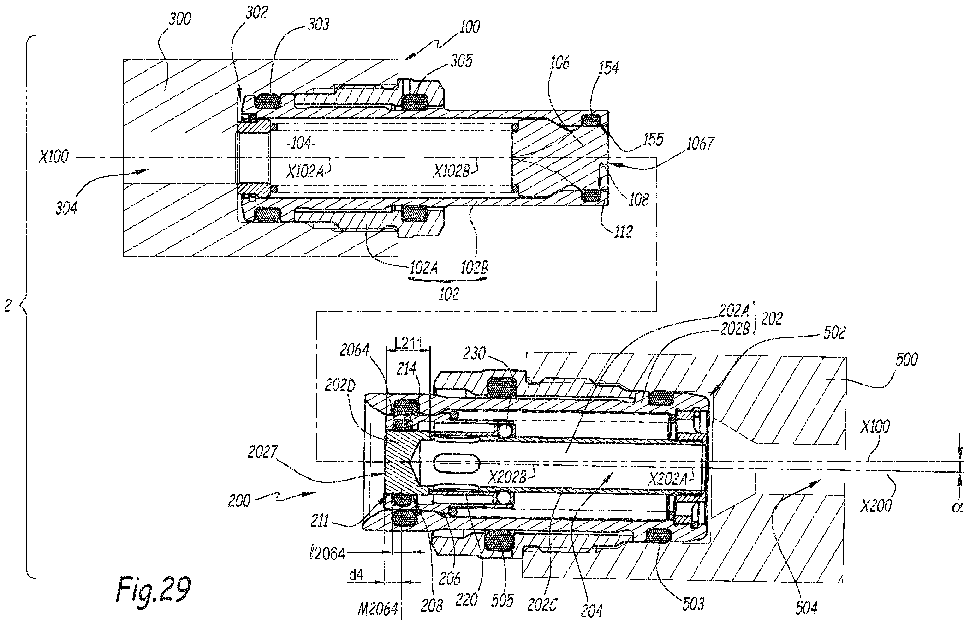

En ce qui concerne le sixième mode de réalisation représenté aux figures 29 à 32, on décrit principalement ce qui distingue ce mode de réalisation de celui des figures 12 à 16.

Dans ce mode de réalisation, un siège 208 est formé autour de la tête 202D du poussoir central 202C de l'élément femelle 200, afin de recevoir un appui un joint d'étanchéité 214 porté par le clapet 206, lequel est soumis à l'action d'un ressort de rappel 232.

Ce siège 208 est formé par une surface périphérique externe 211 de la tête 202D, dont on note L211 la longueur axiale.

Par ailleurs, on note ℓ2064 la largeur axiale d'une gorge radiale interne 2064 du clapet 206 dans laquelle est disposé le joint d'étanchéité 214, ainsi que M2064 son milieu axial, défini comme un plan perpendiculaire à l'axe longitudinal X200 de l'élément femelle 200 du raccord et médian entre les bords avant et arrière de la gorge 2064.

On note d4 la distance axiale entre la face avant 2067 du clapet 206 et le milieu axial M2064.

La longueur axiale L211 est supérieure ou égale au double de la distance axiale d4. Avantageusement, la longueur axiale L211 est strictement supérieure à la distance axiale d4, de préférence supérieure ou égale à 2,5 fois cette distance axiale d4.

Par ailleurs, on note M155 le milieu axial d'une la gorge 155 dans laquelle est disposé un joint d'étanchéité 154 qui équipe l'extrémité avant 112 du corps 102 de l'élément mâle et qui est en contact avec un siège 108 formé par l'extrémité avant 112 du corps 102, lorsque le clapet 106 est en position de fermeture. Le milieu axial M155 est défini comme un plan perpendiculaire à l'axe longitudinal X100 de l'élément mâle du raccord 2, médian entre les bords avant et arrière de la gorge 155.

En configuration d'accouplement ou de désaccouplement des éléments mâle et femelle 100 et 200 du raccord 2, la face avant 2027 du poussoir 202C vient en appui contre la face avant 1067 du clapet 106 de l'élément mâle et la face avant 1127 de l'extrémité 112 du corps 102 vient en contact de la face avant 2067 du clapet 206 . On note d6 la distance axiale entre les milieux axiaux M155 et M2064 dans ces configurations où la face avant 1127 est au contact de la face avant 2067. La distance d6 est sensiblement égale au double de la distance d4, préférentiellement la distance d6 est 2 à 2,5 fois supérieure à la distance d4.La longueur axiale L211 est supérieure ou égale à la distance axiale d6. De façon avantageuse, la longueur axiale L211 est strictement supérieure à la distance axiale d6, de préférence supérieure ou égale à 1,2 fois cette distance axiale d6.

Pour les mêmes raisons que celles mentionnées ci-dessus au sujet du cinquième mode de réalisation, les valeurs relatives des longueurs L211 et des distances d4 et/ou d6 permet que, lors de l'accouplement des éléments mâle et femelle 100 et 200, le joint d'étanchéité 154 vient en appui étanche contre la surface 211, alors que le joint d'étanchéité 214 est toujours en appui étanche contre cette surface, ce qui empêche le fluide sous pression de transiter entre le corps 102 et la tête 202D du poussoir 202C dans une zone Z1 définie à l'interface entre le corps 102 et le clapet 206, en particulier au voisinage des faces avant 2067 et 1127.

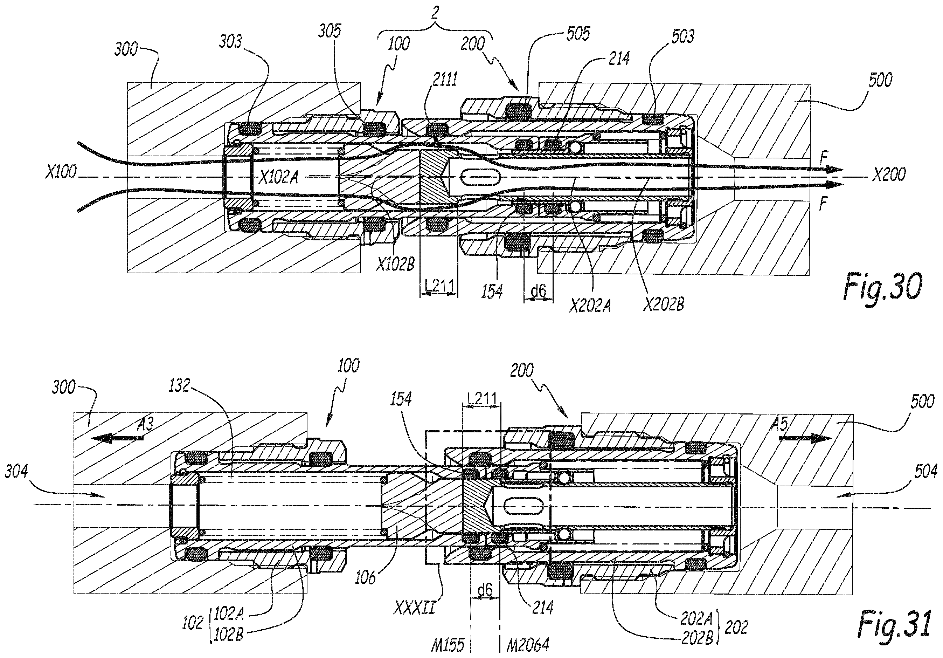

De même, en cours de désaccouplement des éléments 100 et 200 représenté par les flèches A3 et A5 à la figure 31, compte tenu des rapports entre, d'une part, la longueur L211 et, d'autre part, les distances d4 et/ou d6, le joint d'étanchéité 214 vient en contact étanche avec la surface 211 avant que le joint 154 ne quitte cette surface 211 pour venir en contact étanche avec le clapet 106. La phase transitoire de désaccouplement, dans laquelle le joint 214 est parvenu en contact étanche avec la surface 211 alors que le joint 154 est encore en contact étanche avec la surface 211, est illustrée en figures 31 et 32.

Les risques d'écoulement de fluide sous pression dans une zone Z1 définie comme dans le cinquième mode de réalisation et de mouvement du clapet 106 vers l'arrière à l'encontre du ressort 132 sous l'effort de la pression du fluide en circulation dans Z1, qui conduiraient à l'éjection accidentelle du joint 154 en dehors de la gorge 155, sont donc minimisés.

Si l'on prend les notations utilisées pour le mode de réalisation des figures 12 à 16, la relation exprimée ci-dessus entre la longueur axiale L211 et la distance axiale d6 peut s'exprimer sous la forme L211 ≥ ℓ155/2+L1+ℓ2064/2.

Le corps 102 de l'élément mâle est composé d'un corps tubulaire 102B qui loge le clapet 106 et qui est pris axialement en sandwich entre une plaque 300 comparable à celle du cinquième mode de réalisation, et un corps tubulaire 102A qui entoure le corps 102B et qui est vissé dans un taraudage d'un orifice 302 de la plaque 300, avec possibilité d'oscillation du corps 102B par rapport au corps 102A et à la plaque 300. Un premier joint d'étanchéité 303 est disposé entre le corps 102B et une surface périphérique interne de l'orifice 302 dans lequel est engagé le corps 102A et dans lequel débouche un conduit 304 de circulation de fluide. Un deuxième joint d'étanchéité 305 est disposé entre les corps 102A et 102B, en avant du joint 303 le long de l'axe X300. Le joint d'étanchéité 303 assure l'étanchéité du conduit 104, formé dans le corps 102B, et du conduit 304 lorsque le clapet 106 est en position de fermeture, en contact avec un siège 108 formé par l'extrémité avant 112 du corps 102. Ces joints d'étanchéité 303 et 305 sont élastiquement déformables et ramènent également le corps 102B dans une position neutre où l'axe central X102B du corps 102B est coaxial avec l'axe central X102A du corps 102A en configuration désaccouplée. Cette configuration est celle représentée sur la figure 29.

Le corps 202 de l'élément femelle 200 est composé d'un corps tubulaire 202B qui loge le clapet 206 et qui est pris axialement en sandwich entre une plaque 500 et un corps tubulaire 202A vissé dans un taraudage d'un orifice 502 de la plaque 500 dans lequel débouche un conduit 504 de circulation de fluide sous pression. Les parties 502 et 504 jouent le même rôle que la canalisation C2 dans le premier mode de réalisation. Un premier joint d'étanchéité 503 est disposé entre le corps tubulaire 202B et une surface périphérique interne de l'orifice 502, alors qu'un deuxième joint d'étanchéité 505 est disposé entre les corps tubulaires 202A et 202B formant le corps 202, en avant du joint 503 le long de l'axe X200. Les joints 503 et 505 permettent l'oscillation de la partie de corps 202B dans le corps 202A. Le joint 503 assure l'étanchéité du conduit interne 204 de l'élément femelle 200 et du conduit 504, lorsque le clapet 206 est en position de fermeture en contact avec le siège 208.

Comme les joints 303 et 305, les joints 503 et 505 sont élastiquement déformables et ramènent par défaut la partie de corps 202B dans une position neutre, où son axe central X202B est coaxial avec l'axe central X202A de la partie de corps 202A, en configuration désaccouplée.

Comme représenté aux figures 29, 30 et 31, notamment par l'angle de décalage α à la figure 29, les parties de corps 102B et 202B peuvent ne pas être parfaitement alignées avant d'être emmanchées l'une dans l'autre. Le mode de montage des corps 102 et 202 sur les plaques 300 et 500 permet d'accommoder un tel désalignement et d'aligner automatiquement les parties de corps 102B et 202B en cours d'accouplement, sans risque de coincement. Ainsi les corps 102B et/ou 202 B s'inclinent vis-à-vis des corps 102A, respectivement 202A, pour permettre un alignement des axes X102B et X202B.

Sur les autres aspects non détaillés ci-dessus, notamment en ce qui concerne la jupe 220 et les billes 230, ce mode de réalisation fonctionne comme celui des figures 12 à 16. En particulier, en cours d'accouplement et en configuration accouplée, la jupe 220 recouvre radialement le joint d'étanchéité 214 du clapet 206, ainsi que le joint d'étanchéité 154 de l'élément de raccord 100.

Quel que soit le mode de réalisation, l'invention permet de garantir la position initiale, la position en cours d'accouplement et la position finale de la jupe 120 et/ou 220 vis-à-vis du joint 114 ou 214 qu'elle doit recouvrir. L'invention garantit également que la jupe 120 ou 220 peut venir en recouvrement complet du joint 114 ou 214 qu'elle doit recouvrir. Ceci n'est pas le cas avec le matériel de EP-A-0 621 430 si les frottements du joint sur la jupe sont supérieurs aux efforts élastiques exercés par le ressort correspondant ou si un ressort repoussant une jupe est défaillant.

L'invention permet également de garantir une protection efficace du joint 114 ou 214 en cas de pression appliquée par le fluide en position ouverte du clapet correspondant. En effet, quel que soit le mode de réalisation, la jupe reste solidaire du clapet appartenant au même élément de raccord en position totalement ouverte du clapet.

Par ailleurs, par rapport à EP-A-0 621 430, la construction est simplifiée par suppression d'au moins un ressort dans le ou chaque élément de raccord équipé d'une jupe.

En ménageant les surfaces de blocage S1 et S2 et les logements de réception 1068 ou 2068, 1028 ou 2028, de l'organe d'attelage 130 et/ou 230 respectivement sur le clapet et sur le corps, on garantit la précision du séquencement de l'attelage.

Du fait que la jupe 120 et/ou 220 est apte à venir en butée avant contre le corps dans la première position radiale de l'organe d'attelage correspondant à une coopération de l'organe d'attelage avec le logement annulaire du corps, on facilite le séquencement de l'attelage au désaccouplement.

En prévoyant une valeur maximale Lₘₐₓ de la distance L inférieure ou égale à la moitié ou au tiers de la largeur axiale de la gorge de réception du joint tant que l'organe d'attelage est dans sa première position radiale, on assure que le joint reste suffisamment recouvert par la jupe et/ou le corps, ce qui garantit qu'il n'est pas expulsé de sa gorge par la pression du fluide à l'accouplement et au désaccouplement. En particulier, on peut prévoir une valeur maximale Lₘₐₓ de la distance L inférieure ou égale à 0,5 mm, de préférence inférieure ou égale à 0,3 mm, lorsque le joint torique à recouvrir par la jupe a un diamètre de tore supérieur ou égal à 1 mm.

La mise en butée arrière du clapet contre la jupe garantit le mouvement de l'organe d'attelage sans coincement de sa première position radiale vers sa deuxième position radiale correspondant à une coopération de l'organe d'attelage avec le logement annulaire du clapet.

Lorsque la surface de recouvrement de la jupe présente le même diamètre que le siège du joint en position de fermeture du clapet, on limite les expulsions de joint et les sollicitations sur le joint.

La paire de billes 130 permet de limiter la dimension axiale du logement radial traversant dans la jupe.

Selon une variante non représentée de l'invention, les billes ou paires de billes 130 ou 230 peuvent être remplacées par des taquets ou pions allongés qui coulissent avec un mouvement ayant au moins une composante radiale dans les logements 128 ou 228 de la jupe, avec la dimension radiale de chaque taquet ou pion strictement supérieure à la hauteur radiale du logement dans lequel il est installé.

Outre un verrouillage par baïonnette et par vissage des éléments mâle et femelle de raccord, qui peut être utilisé dans tous les modes de réalisation de l'invention, d'autres types de verrouillage des éléments mâle et femelle l'un sur l'autre peuvent être envisagés, notamment un verrouillage au moyen d'organes de verrouillage tels des billes, des doigts ou des segments, associés à une bague de verrouillage mobile axialement et mobiles dans le corps de l'élément femelle, entre une position de verrouillage en coopération axiale avec le corps de l'élément mâle et une position de déverrouillage dans laquelle les organes de verrouillage ne s'opposent pas au mouvement du corps de l'élément mâle dans le corps de l'élément femelle, ou au moyen de plaques solidaires respectivement de l'élément mâle de raccord et de l'élément femelle de raccord et maintenues l'une par rapport à l'autre en configuration accouplée du raccord.

Dans le cas où l'élément femelle de raccord 200 est équipé d'une jupe 220, il peut être prévu que le clapet 206 soit pourvu d'une partie en saillie radialement vers l'axe X200, ce qui lui permet de venir en butée sur l'avant contre la jupe 220 en configuration désaccouplée, au lieu d'être en butée contre le corps 202.

En variante, le sens d'écoulement du fluide au sein du raccord 2 peut être inverse de celui représenté par les flèches F aux figures 8, 10, 16 et 24.

Quel que soit le mode de réalisation, le nombre de répartition des organes d'attelages 130 et 230 peut être adapté en fonction de la géométrie du raccord 2 et de la pression et/ou du début du fluide qui y transite. Ce nombre est supérieur ou égal à 1. Les modes de réalisation et variantes envisagés ci-dessus peuvent être combinés entre eux pour générer de nouveaux modes de réalisation, dans le cadre des revendications ci-jointes. En particulier, un organe d'attelage du type de celui du deuxième mode de réalisation, monobloc avec la jupe, peut être mis en œuvre dans les troisième et quatrième modes de réalisation. En outre, une butée arrière au déplacement du clapet lorsqu'il est attelé à la jupe, du type de celle du deuxième mode, peut être mise en œuvre dans le troisième mode de réalisation. Egalement, une variation de diamètre de la surface radiale externe S222 de la jupe du troisième mode de réalisation peut être mise en œuvre au niveau de la surface radiale interne de la jupe dans le premier mode de réalisation.

## Revendications

1. Elément (100 ; 200) de raccord fluidique (2) comprenant :
- un corps (102 ; 202) délimitant un conduit (104 ; 204) d'écoulement de fluide, ce corps étant centré sur un axe longitudinal (X100 ; X200),
- un clapet (106 ; 206) avec une gorge périphérique radiale (1064 ; 2064) recevant un joint d'étanchéité (114 ; 214), ce clapet étant mobile axialement par rapport au corps entre
• une position de fermeture, dans laquelle le joint du clapet (114 ; 214) est en contact avec un siège correspondant (108 ; 208) formé par le corps, et
• une position d'ouverture, dans laquelle le joint n'est pas en contact avec le siège,
- un organe (132 ; 232) de rappel élastique (E1, E2) du clapet vers sa position de fermeture,
- une jupe (120 ; 220) disposée à l'intérieur du corps et mobile axialement par rapport au clapet (106 ; 206) entre
• une première position dans laquelle la jupe (120 ; 220) est dégagée axialement par rapport au joint (114 ; 214) et
• une deuxième position dans laquelle la jupe (120 ; 220) recouvre radialement le joint (114 ; 214),
**caractérisé en ce que**
- cet élément de raccord comprend au moins un organe d'attelage (130 ; 230) solidaire axialement de la jupe (120 ; 220) et mobile radialement à l'axe longitudinal (X100 ; X200) par rapport au corps (102 ; 202) entre
• une première position radiale, dans laquelle l'organe d'attelage (130 ; 230) solidarise axialement la jupe (120 ; 220) et le corps (102 ; 202), et autorise un mouvement axial relatif du clapet par rapport à la jupe, et
• une deuxième position radiale, dans laquelle l'organe d'attelage (130 ; 230) solidarise axialement la jupe (120 ; 220) et le clapet (106 ; 206) et autorise un mouvement axial relatif de la jupe par rapport au corps, dans une configuration où la jupe recouvre radialement le joint (114 ; 214).

2. Elément de raccord selon la revendication 1, **caractérisé en ce que** :
- le clapet (106 ; 206) comprend une première surface (S1) de blocage de l'organe d'attelage dans sa première position radiale, ainsi qu'un premier logement (1068 ; 2068) de réception d'une partie de l'organe d'attelage dans sa deuxième position radiale, le premier logement (1068 ; 2068) étant adjacent le long de l'axe longitudinal (X100 ; X200) à la première surface de blocage (S1); et
- le corps (102 ; 202) comprend une deuxième surface (S2) de blocage de l'organe d'attelage dans sa deuxième position radiale, ainsi qu'un deuxième logement (1028 ; 2028) de réception d'une partie de l'organe d'attelage dans sa première position radiale, le deuxième logement de réception (1028 ; 2028) étant adjacent le long de l'axe longitudinal (X100 ; X200) à la deuxième surface de blocage (S2).

3. Elément de raccord selon la revendication 2, **caractérisé en ce que**, en configuration désaccouplée, le clapet est dans sa position de fermeture, la jupe est dans sa première position et l'organe d'attelage est maintenu dans sa première position radiale par la première surface de blocage (S1) du clapet, **en ce que** le premier logement de réception (1068 ; 2068) est disposé à l'avant de la première surface de blocage (S1) et **en ce que** le deuxième logement de réception (1028 ; 2028) est disposé à l'avant de la deuxième surface de blocage (S2).

4. Elément de raccord selon l'une des revendications précédentes, **caractérisé en ce que** la jupe (120 ; 220) est configurée pour venir en butée avant contre le corps (102 ; 202), alors que l'organe d'attelage (130 ; 230) est dans sa première position radiale.

5. Elément de raccord selon l'une des revendications précédentes, **caractérisé en ce que** lorsque l'organe d'attelage (130 ; 230) est dans sa première position radiale, la valeur maximale (Lₘₐₓ) d'une distance axiale (L), mesurée entre la jupe (120, 220) et une partie (112 ; 202D) du corps formant le siège (108 ; 208), est inférieure ou égale à la moitié, de préférence au tiers, de la largeur (ℓ1064 ; ℓ2064) de la gorge périphérique radiale (1064 ; 2064) recevant le joint (114, 214), mesurée parallèlement à l'axe longitudinal (X100 ; X200).

6. Elément de raccord selon l'une des revendications précédentes, **caractérisé en ce qu'**une surface (1063 ; 2063) du clapet (106 ; 206) est apte à venir en butée arrière contre la jupe (120 ; 220) dans une configuration où l'organe d'attelage (130 ; 230) est apte à venir dans sa deuxième position radiale.

7. Elément de raccord selon l'une des revendications précédentes, **caractérisé en ce que** la jupe (120 ; 220) est pourvue d'une portion tubulaire (122 ; 222) formant une surface (S122 ; S222) radiale cylindrique à section circulaire de recouvrement radial du joint (114 ; 214) et **en ce qu'**un diamètre (D122 ; D222₁) de cette surface est égal au diamètre (D110 ; D202) de la partie (112 ; 202D) du corps (102 ; 202) formant le siège (108 ; 208).

8. Elément de raccord selon l'une des revendications précédentes, **caractérisé en ce que** la jupe (120 ; 220) est équipée d'un logement radial (128 ; 228) traversant, dans lequel l'organe d'attelage (130 ; 230) est mobile et **en ce que** l'organe d'attelage présente une dimension radiale supérieure à la dimension radiale du logement radial traversant.

9. Elément de raccord selon l'une des revendications précédentes, **caractérisé en ce que** la longueur axiale (L110 ; L211) d'une surface (110 ; 211) d'une partie (112 ; 202D), qui constitue le siège (108 ; 208) formé par le corps (102 ; 202), est supérieure ou égale au double d'une distance axiale (d4) entre, d'une part, le milieu axial (M1064; M2064) de la gorge périphérique radiale (1064 ; 2064) de réception du joint d'étanchéité (114 ; 214) et, d'autre part, une face avant (1067 ; 2067) du clapet (106 ;206).

10. Elément (100) de raccord selon l'une des revendications précédentes, **caractérisé en ce que**
- le joint d'étanchéité (114) est logé dans une gorge périphérique radiale externe (1064) d'une partie avant (112) du clapet (106);
- le clapet comprend une tige (1066) d'épaisseur radiale (D1/2) inférieure à une épaisseur radiale de la partie avant (1062)
- la jupe (120) est montée autour du clapet (106) ;
- dans sa première position radiale, l'organe d'attelage (130) coopère avec une gorge annulaire interne (1028) du corps ;
- dans sa deuxième position radiale, l'organe d'attelage (130) coopère avec une gorge annulaire externe (1068) de la tige (1066).

11. Elément (200) de raccord selon l'une des revendications 1 à 9, **caractérisé en ce que**
- le joint d'étanchéité (214) est logé dans une gorge périphérique radiale interne (2064) du clapet (206) ;
- le corps (202) comprend
un poussoir central fixe (202C) qui forme le siège (208) et
un élément tubulaire (202B) pourvu d'un deuxième joint d'étanchéité (252) ;
- le clapet (206) est monté coulissant autour du poussoir central fixe et à l'intérieur de l'élément tubulaire ;
- dans sa position de fermeture, le deuxième joint (252) est en contact avec le clapet (206);
- la jupe (220) est montée, radialement à l'axe longitudinal (X200), entre le poussoir et le clapet ;
- dans sa première position radiale, l'organe d'attelage (230) coopère avec une gorge annulaire externe (2028) du poussoir ;
- dans sa deuxième position radiale, l'organe d'attelage (230) coopère avec une gorge annulaire interne (2068) du clapet (206).

12. Raccord fluidique (2) pour la jonction de canalisations de fluide sous pression, comprenant un élément mâle (100) de raccord et un élément femelle (200) de raccord complémentaire prévus pour s'emmancher l'un dans l'autre, **caractérisé en ce que** l'un au moins (100 ; 200) des éléments mâle et femelle de raccord est selon l'une des revendications précédentes.

13. Raccord selon la revendication 12, **caractérisé en ce que** seul un premier élément de raccord (100 ; 200), parmi l'élément mâle et l'élément femelle, est selon l'une des revendications 1 à 11, **en ce que** le clapet (106 ; 206) du premier élément de raccord est apte à être déplacé vers sa position d'ouverture par un corps (202 ; 102) du deuxième élément de raccord (200 ; 100), parmi l'élément mâle et l'élément femelle, et **en ce que**, en configuration accouplée, la jupe (120 ; 220) du premier élément de raccord est apte à recouvrir radialement le joint d'étanchéité (114 ; 214) du clapet (106 ; 206) du premier élément de raccord ainsi qu'un joint d'étanchéité (254 ; 154) reçu dans une gorge périphérique radiale (202G ; 155) du corps (202 ; 102) du deuxième élément de raccord (200 ; 100).

14. Raccord selon la revendication 13, **caractérisé en ce que** la longueur axiale (L100 ; L211) de la surface (110 ; 211) de la partie (112 ; 202D) qui constitue le siège (108 ; 208) formé par le corps (102, 202) du premier élément de raccord est supérieure ou égale à une distance axiale (d6) prise, lorsque les premier et deuxième éléments (100, 200) du raccord sont en cours d'accouplement ou de désaccouplement, la face avant (1067 ; 2067) du clapet (106 ; 206) du premier élément de raccord étant en contact avec le corps (202 ; 102) du deuxième élément de raccord, entre, d'une part, le milieu axial (M1064 ; M2064) de la gorge périphérique radiale (1064 ; 2064) du clapet (106 ; 206) du premier élément de raccord et, d'autre part, le milieu axial (M202G : M155) de la gorge périphérique radiale (202G ; 155) du corps (202 ; 102) du deuxième élément de raccord (200 ; 100).

15. Raccord selon la revendication 12, **caractérisé en ce que**
- l'élément mâle (100) de raccord est selon l'une des revendications 1 à 10 ;
- l'élément femelle (200) de raccord complémentaire est selon l'une des revendications 1 à 9, ou 11 ;
- en configuration accouplée du raccord, les organes d'attelage (130 ; 230) des éléments mâle et femelle de raccord sont chacun dans leur deuxième position radiale et les clapets (106 ; 206) des éléments mâle et femelle de raccord sont chacun dans leur position d'ouverture.

## Patentansprüche

1. Element (100; 200) einer Fluidkupplung (2), umfassend:
- einen Körper (102; 202), der einen Kanal (104; 204) für eine Fluidströmung begrenzt, wobei dieser Körper auf eine Längsachse (X100; X200) zentriert ist,
- ein Ventil (106; 206) mit einer radialen Umfangsnut (1064; 2064), die eine Dichtung (114; 214) aufnimmt, wobei dieses Ventil axial in Bezug auf den Körper beweglich ist zwischen
∘ einer Schließstellung, in der die Dichtung (114; 214) des Ventils in Kontakt mit einem entsprechenden von dem Körper gebildeten Sitz (108; 208) ist, und
∘ einer Offenstellung, in der die Dichtung nicht in Kontakt mit dem Sitz ist,
- ein elastisches (E1, E2) Rückstellelement (132; 232) des Ventils in seine Schließstellung,
- eine Hülse (120; 220), die im Inneren des Körpers bezüglich des Ventils (106; 206) axial beweglich angeordnet ist zwischen
∘ einer ersten Position, in der die Hülse (120; 220) axial in Bezug auf die Dichtung (114; 214) freiliegt, und
∘ einer zweiten Position, in der die Hülse (120; 220) radial die Dichtung (114; 214) bedeckt,
**dadurch gekennzeichnet, dass**
- dieses Kupplungselement mindestens ein Verbindungselement (130; 230) aufweist, das axial mit der Hülse (120; 220) verbunden ist und in Bezug auf den Körper (102; 202) radial zur Längsachse (X100; X200) beweglich ist zwischen
∘ einer ersten radialen Position, in der das Verbindungselement (130; 230) axial die Hülse (120; 220) und den Körper (102; 202) verbindet und eine relative axiale Bewegung des Ventils in Bezug auf die Hülse zulässt, und
∘ einer zweiten radialen Position, in der das Verbindungselement (130; 230) axial die Hülse (120; 220) und das Ventil (106; 206) verbindet und eine relative axiale Bewegung der Hülse in Bezug auf den Körper in einer Konfiguration, in der die Hülse radial die Dichtung (114; 214) überdeckt, zulässt.

2. Kupplungselement nach Anspruch 1, **dadurch gekennzeichnet, dass**:
- das Ventil (106; 206) eine erste Fläche (S1) zum Blockieren des Verbindungselementes in seiner ersten radialen Position sowie einen ersten Aufnahmeraum (1068; 2068) für einen Teilbereich des Verbindungselementes in seiner zweiten radialen Position umfasst, wobei der erste Aufnahmeraum (1068; 2068) entlang der Längsachse (X100; X200) angrenzend an die erste Blockierfläche (S1) ist; und
- der Körper (102; 202) eine zweite Fläche (S2) zum Blockieren des Verbindungselementes in seiner zweiten radialen Position sowie einen zweiten Aufnahmeraum (1028; 2028) für einen Teilbereich des Verbindungselementes in seiner ersten radialen Position umfasst, wobei der zweite Aufnahmeraum (1028; 2028) entlang der Längsachse (X100; X200) an die zweite Blockierfläche (S2) angrenzend ist.

3. Kupplungselement nach Anspruch 2, **dadurch gekennzeichnet, dass** das Ventil in der entkuppelten Stellung in seiner Schließstellung ist, die Hülse in ihrer ersten Position und das Verbindungselement in seiner ersten radialen Position durch die erste Blockierfläche (S1) des Ventils gehalten wird, dass der erste Aufnahmeraum (1068; 2068) vor der ersten Blockierfläche (S1) angeordnet ist und dass der zweite Aufnahmeraum (1028; 2028) vor der zweiten Blockierfläche (S2) angeordnet ist.

4. Kupplungselement nach einem der vorhergehenden Ansprüche, **dadurch gekennzeichnet, dass** die Hülse (120; 220) ausgebildet ist, in eine vordere Anlage gegen den Körper (102; 202) zu kommen, während das Verbindungselement (130; 230) in seiner ersten radialen Position ist.

5. Kupplungselement nach einem der vorhergehenden Ansprüche, **dadurch gekennzeichnet, dass**, wenn das Verbindungselement (130; 230) in seiner ersten radialen Position ist, der Maximalwert (Lₘₐₓ) eines axialen Abstandes (L), gemessen zwischen der Hülse (120, 220) und einem den Sitz (108; 208) bildenden Teil (112; 202D) des Körpers, kleiner als die oder gleich der Hälfte, vorzugsweise kleiner als das oder gleich dem Drittel der Breite (I1064; I2064) der die Dichtung (114, 214) aufnehmenden radialen Umfangsnut (1064; 2064), gemessen parallel zur Längsachse (X100; X200), ist.

6. Kupplungselement nach einem der vorhergehenden Ansprüche, **dadurch gekennzeichnet, dass** eine Fläche (1063; 2063) des Ventils (106; 206) geeignet ist, in eine hintere Anlage gegen die Hülse (120; 220) in einer Stellung zu kommen, in der das Verbindungselement (130; 230) in der Lage ist, in seine zweite radiale Position zu kommen.

7. Kupplungselement nach einem der vorhergehenden Ansprüche, **dadurch gekennzeichnet, dass** die Hülse (120; 220) mit einem rohrförmigen Bereich (122; 222) versehen ist, der eine radiale zylindrische Fläche (S122; S222) mit kreisförmigem Querschnitt der radialen Überdeckung der Dichtung (114; 214) bildet, und dass ein Durchmesser (D122; D222) dieser Fläche gleich dem Durchmesser (D110; D202) des den Sitz (108; 208) bildenden Teils (112; 202D) des Körpers (102; 202) ist.

8. Kupplungselement nach einem der vorhergehenden Ansprüche, **dadurch gekennzeichnet, dass** die Hülse (120; 220) mit einem durchgehenden radialen Aufnahmeraum (128; 228) ausgerüstet ist, in dem das Verbindungselement (130; 230) beweglich ist, und dass das Verbindungselement eine radiale Abmessung größer als die radiale Abmessung des durchgehenden radialen Aufnahmeraums aufweist.

9. Kupplungselement nach einem der vorhergehenden Ansprüche, **dadurch gekennzeichnet, dass** die axiale Länge (L110; L211) einer Fläche (110; 211) eines Teils (112; 202D), das den von dem Körper (102; 202) gebildeten Sitz (108; 208) bildet, größer als das Doppelte oder gleich dem Doppelten eines axialen Abstandes (d4) zwischen der axialen Mitte (M1064; M2064) der radialen Umfangsnut (1064; 2064) zur Aufnahme der Dichtung (114; 214), einerseits, und einer Vorderfläche (1067; 2067) des Ventils (106; 206), andererseits, ist.

10. Kupplungselement (100) nach einem der vorhergehenden Ansprüche, **dadurch gekennzeichnet, dass**
- die Dichtung (114) in einer äußeren radialen Umfangsnut (1064) eines vorderen Teils (112) des Ventils (106) aufgenommen ist;
- das Ventil einen Stab (1066) mit einer radialen Dicke (D1/2) kleiner als eine radiale Dicke des vorderen Teils (1062) umfasst,
- die Hülse (120) um das Ventil (106) herum montiert ist;
- das Verbindungselement (130) in seiner ersten radialen Position mit einer inneren Ringnut (1028) des Körpers zusammenarbeitet;
- das Verbindungselement (130) in seiner zweiten radialen Position mit einer äußeren Ringnut (1068) des Stabes (1066) zusammenarbeitet.

11. Kupplungselement (200) nach einem der Ansprüche 1 bis 9, **dadurch gekennzeichnet, dass**
- die Dichtung (114) in einer inneren radialen Umfangsnut (2064) des Ventils (106) aufgenommen ist;
- der Körper (202) umfasst
einen feststehenden mittleren Stößel (202C), der den Sitz (208) bildet und
ein rohrförmiges Element (202B), das mit einer zweiten Dichtung (252) versehen ist;
- das Ventil (206) gleitend um den feststehenden mittleren Stößel und im Inneren des rohrförmige Elements montiert ist;
- die zweite Dichtung (252) in ihrer Schließstellung in Kontakt mit dem Ventil (206) ist;
- die Hülse (220) radial zur Längsachse (X 200) zwischen dem Stößel und dem Ventil montiert ist;
- das Verbindungselement (230) in seiner ersten radialen Position mit einer äußeren Ringnut (2028) des Stößels zusammenarbeitet;
- das Verbindungselement (230) in seiner zweiten radialen Position mit einer inneren Ringnut (2068) des Ventils (206) zusammenarbeitet.

12. Fluidkupplung (2) für die Verbindung von unter Druck stehenden Fluidleitungen, die ein Kupplungseinsteckelement (100) und ein komplementäres Kupplungsaufnahmeelement (200), aufweist, die zum Ineinandergreifen vorgesehen sind, **dadurch gekennzeichnet, dass** mindestens eines (100; 200) des Kupplungseinsteckelementes und des Kupplungsaufnahmeelementes nach einem der vorhergehenden Ansprüche ausgebildet ist.

13. Kupplung nach Anspruch 12, **dadurch gekennzeichnet, dass** nur ein erstes Kupplungselement (100; 200), ausgewählt aus dem Einsteckelement und dem Aufnahmeelement, nach einem der Ansprüche 1 bis 11 ausgebildet ist, dass das Ventil (106; 206) des ersten Kupplungselementes in der Lage ist, von einem Körper (202; 102) des zweiten Kupplungselementes (200; 100), ausgewählt aus dem Einsteckelement und dem Aufnahmeelement, in seine Offenstellung bewegt zu werden, und dass in der gekuppelten Stellung die Hülse (120; 220) des ersten Kupplungselementes in der Lage ist, radial die Dichtung (114; 214) des Ventils (106; 206) des ersten Kupplungselementes sowie eine Dichtung (254; 154), die in einer radialen Umfangsnut (202G; 155) des Körpers (202; 102) des zweiten Kupplungselementes (200; 100) aufgenommen ist, zu überdecken.

14. Kupplung nach Anspruch 13, **dadurch gekennzeichnet, dass** die axiale Länge (L100; L211) der Fläche (110; 211) des Teils (112; 202D), das den von dem Körper (102, 202) des ersten Kupplungselementes gebildeten Sitz (108; 208) darstellt, größer als ein axialer Abstand (d6) oder gleich diesem ist, der aufgenommen wird, wenn das erste und zweite Kupplungselement (100, 200) im Zustand des Kuppelns oder des Entkuppelns sind, wobei die Vorderseite (1067; 2067) des Ventils (106; 206) des ersten Kupplungselementes in Kontakt mit dem Körper (202; 102) des zweiten Kupplungselementes zwischen der axialen Mitte (M1064; M2064) der radialen Umfangsnut (1064; 2064) des Ventils (106; 206) des ersten Kupplungselementes, einerseits, und der axialen Mitte (M202G; M155) der radialen Umfangsnut (202G; 155) des Körpers (202; 102) des zweiten Kupplungselementes (200; 100), andererseits, ist.

15. Kupplung nach Anspruch 12, **dadurch gekennzeichnet, dass**
- das Kupplungseinsteckelement (100) nach einem der Ansprüche 1 bis 10 ausgebildet ist;
- das komplementäre Kupplungsaufnahmeelement nach einem der Ansprüche 1 bis 9 oder 11 ausgebildet ist;
- in der gekuppelten Stellung der Kupplung die Verbindungselemente (130; 230) des Kupplungseinsteckelementes und Kupplungsaufnahmeelementes jeweils in ihrer zweiten radialen Position sind und die Ventile (106; 206) des Kupplungseinsteckelementes und Kupplungsaufnahmeelementes jeweils in ihrer Offenstellung sind.

## Claims

1. A fluid coupling (2) element (100; 200), comprising:
- a body (102; 202) delimiting a fluid flow pipe (104; 204), this body being centered on a longitudinal axis (X100; X200),
- a valve (106; 206) with a radial peripheral groove (1064; 2064) receiving a sealing gasket (114; 214), this valve being axially movable relative to the body between
• a closed position, in which the gasket of the valve (114; 214) is in contact with a corresponding seat (108; 208) formed by the body, and
• an open position, in which the gasket is not in contact with the seat,
- a member (132; 232) for resiliently returning (E1, E2) the valve toward its closed position,
- a skirt (120; 220) positioned inside the body and axially movable relative to the valve (106; 206) between
• a first position, in which the skirt (120; 220) is axially released relative to the gasket (114; 214) and
• a second position, in which the skirt (120; 220) radially covers the gasket (114; 214),
**characterized in that**
- this coupling element comprises at least one hitching member (130; 230) axially secured to the skirt (120; 220) and radially movable with respect to the longitudinal axis (X100; X200) relative to the body (102; 202) between
• a first radial position, in which the hitching member (130; 230) axially secures the skirt (120; 220) and the body (102; 202), and allows a relative axial movement of the valve with respect to the skirt, and
• a second radial position, in which the hitching member (130; 230) axially secures the skirt (120; 220) and the valve (106; 206), and allows a relative axial movement of the skirt with respect to the body, in a configuration where the skirt radially covers the gasket (114; 214).

2. The coupling element according to claim 1, **characterized in that**:
- the valve (106; 206) comprises a first surface (S1) for blocking the hitching member in its first radial position, as well as a first housing (1068; 2068) for receiving part of the hitching member in its second radial position, the first housing (1068; 2068) being adjacent along the longitudinal axis (X100; X200) to the first blocking surface (S1); and
- the body (102; 202) comprises a second surface (S2) for blocking the hitching member in its second radial position, as well as a second housing (1028; 2028) for receiving part of the hitching member in its first radial position, the second receiving housing (1028; 2028) being adjacent along the longitudinal axis (X100; X200) to the second blocking surface (S2).

3. The coupling element according to claim 2, **characterized in that**, in the uncoupled configuration, the valve is in its closed position, the skirt is in its first position and the hitching member is kept in its first radial position by the first blocking surface (S1) of the valve, while the first receiving housing (1068; 2068) is positioned in front of the first blocking surface (S1) and **in that** the second receiving housing (1028; 2028) is positioned in front of the second blocking surface (S2).

4. The coupling element according to one of the preceding claims, **characterized in that** the skirt (120; 220) is configured to abut forward against the body (102; 202), while the hitching member (130; 230) is in its first radial position.

5. The coupling element according to one of the preceding claims, **characterized in that** when the hitching member (130; 230) is in its first radial position, the maximum value (Lₘₐₓ) of an axial distance (L), measured between the skirt (120, 220) and a part (112; 202D) of the body forming the seat (108; 208), is less than or equal to half, preferably one third, of the width (ℓ1064; ℓ2064) of the radial peripheral groove (1064; 2064) receiving the gasket (114, 214), measured parallel to the longitudinal axis (X100; X200).

6. The coupling element according to one of the preceding claims, **characterized in that** a surface (1063; 2063) of the valve (106; 206) is able to abut rearward against the skirt (120; 220) in a configuration where the hitching member (130; 230) is able to come into its second radial position.

7. The coupling element according to one of the preceding claims, **characterized in that** the skirt (120; 220) is provided with a tubular portion (122; 222) forming a cylindrical radial surface (S122; S222) with a circular section radially covering the gasket (114; 214) and **in that** a diameter (D122; D222₁) of this surface is equal to the diameter (D110; D202) of the surface of the part (112; 202D) of the body (102; 202) forming the seat (108; 208).

8. The coupling element according to one of the preceding claims, **characterized in that** the skirt (120; 220) is equipped with a radial through housing (128; 228), in which the hitching member (130; 230) is movable and **in that** the hitching member has a radial dimension larger than the radial dimension of the radial through housing.

9. The coupling element according to one of the preceding claims, **characterized in that** the axial length (L110; L211) of a surface (110; 211) of a part (112; 202D), which constitutes the seat (108; 208) formed by the body (102; 202), is greater than or equal to twice an axial distance (d4) between the axial middle (M1064; M2064) of the radial peripheral groove (1064; 2064) for receiving the sealing gasket (114; 214) on the one hand, and a front face (1067; 2067) of the valve (106; 206) on the other hand.

10. The coupling element (100) according to one of the preceding claims, **characterized in that**:
- the sealing gasket (114) is housed in an outer radial peripheral groove (1064) of the front part (112) of the valve (106)
- the valve comprises a rod (1066) with a radial thickness (D1/2) smaller than a radial thickness of the front part (1062)
- the skirt (120) is mounted around the valve (106);
- in its first radial position, the hitching member (130) cooperates with an inner annular groove (1028) of the body;
- in its second radial position, the hitching member (130) cooperates with an outer annular groove (1068) of the rod (1066).

11. The coupling element (200) according to one of claims 1 to 9, **characterized in that**:
- the sealing gasket (214) is housed in an inner radial peripheral groove (2064) of the valve (206);
- the body (202) comprises
a fixed central plunger (202C) that forms the seat (208) and
a tubular element (202B) provided with a second sealing gasket (252);
- the valve (206) is mounted sliding around the fixed central plunger and inside the tubular element;
- in its closed position, the second gasket (252) is in contact with the valve (206);
- the skirt (220) is mounted, radially with respect to the longitudinal axis (X200), between the plunger and the valve;
- in its first radial position, the hitching member (230) cooperates with an outer annular groove (2028) of the plunger;
- in its second radial position, the hitching member (230) cooperates with an inner annular groove (2068) of the valve (206).

12. A fluid coupling (2) for joining pressurized fluid pipes, comprising a male coupling element (100) and a female coupling element (200), **characterized in that** at least one (100; 200) of the male and female coupling elements is according to one of the preceding claims.

13. The coupling according to claim 12, **characterized in that** only a first coupling element, (100; 200) from among the male element and the female element, is according to one of claims 1 to 11, **in that** the valve (106; 206) of the first coupling element is able to be moved toward its open position by a body (202; 102) of the second coupling element (200; 100), from among the male element and the female element, and **in that**, in the coupled configuration, the skirt (120; 220) of the first coupling element is able to radially cover the sealing gasket (114; 214) of the valve (106; 206) of the first coupling element as well as a sealing gasket (254; 154) received in a radial peripheral groove (202G; 155) of the body (202; 102) of the second coupling element (200; 100).

14. The coupling according to claim 13, **characterized in that** the axial length (L100; L211) of the surface (110; 211) of the part (112; 202D) that makes up the seat (108; 208) formed by the body (102, 202) of the first coupling element is greater than or equal to a considered axial distance (d6), when the first and second elements (100, 200) of the coupling are being coupled or uncoupled, the front face (1067; 2067) of the valve (106; 206) of the first coupling element being in contact with the body (202; 102) of the second coupling element, between the axial middle (M1064; M2064) of the radial peripheral groove (1064; 2064) of the valve (106; 206) of the first coupling element on the one hand, and the axial middle (M202G; M155) of the radial peripheral groove (202G; 155) of the body (202; 102) of the second coupling element (200; 100) on the other hand.

15. The coupling according to claim 12, **characterized in that**
- the male coupling element (100) is according to one of claims 1 to 10;
- the complementary female coupling element (200) is according to one of claims 1, 9 or 11;
- in the coupled configuration of the coupling, the hitching members (130; 230) of the male and female coupling elements are each in their second radial position and the valves (106; 206) of the male and female coupling elements are each in their open position.
